(19) Europäisches Patentamt

European Patent Office

Office européen des brevets

(11) **EP 3 511 803 B1**

(12) **EUROPEAN PATENT SPECIFICATION**

(45) Date of publication and mention
of the grant of the patent:
**03.11.2021  Bulletin 2021/44**

(51) Int Cl.:
*G06F 3/01* (2006.01)     *G06F 3/0481* (2013.01)
*G06F 3/0484* (2013.01)    *G06K 9/00* (2006.01)

(21) Application number: **19150975.1**

(22) Date of filing: **09.01.2019**

(54) **METHOD AND APPARATUS TO DETERMINE TRIGGER INTENT OF USER**

VERFAHREN UND VORRICHTUNG ZUM BESTIMMEN DER AUSLÖSEABSICHT EINES BENUTZERS

PROCÉDÉ ET APPAREIL POUR DÉTERMINER L'INTENTION DE DÉCLENCHEMENT D'UN UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2018   CN 201810024682
04.10.2018   KR 20180118228**

(43) Date of publication of application:
**17.07.2019   Bulletin 2019/29**

(73) Proprietor: **Samsung Electronics Co., Ltd.
Suwon-si, Gyeonggi-do, 16677 (KR)**

(72) Inventors:
• **Zhang, Hui**
  **16678 Gyeonggi-do (KR)**
• **Guo, Tianchu**
  **16678 Gyeonggi-do (KR)**
• **Qian, Deheng**
  **16678 Gyeonggi-do (KR)**

• **Liu, Xiabing**
  **16678 Gyeonggi-do (KR)**
• **Kim, Youngsung**
  **16678 Gyeonggi-do (KR)**
• **Yoo, Byung IN**
  **16678 Gyeonggi-do (KR)**
• **Han, Jaejoon**
  **16678 Gyeonggi-do (KR)**
• **Choi, Changkyu**
  **16678 Gyeonggi-do (KR)**

(74) Representative: **Hylarides, Paul Jacques et al
Arnold & Siedsma
Bezuidenhoutseweg 57
2594 AC Den Haag (NL)**

(56) References cited:
**CN-A- 106 020 591     US-A- 4 836 670
US-A1- 2010 205 667    US-A1- 2014 372 957
US-A1- 2015 331 485    US-B1- 9 832 452**

**Description**

BACKGROUND

1. Field

The following description relates to determining a trigger intent of a user.

2. Description of Related Art

A gaze interaction indicates performing a human-machine interaction task through a gaze of an eye of a user on a graphical user interface (GUI). A general type of this interaction may involve the following two operations.

First, the interaction involves localization, which is an operation of determining a target of an interaction on a GUI, such as, for example, a button and an icon, a link. Second, the interaction involves triggering/activation, which is an operation of executing a command or instruction corresponding to a measured location. For example, for a computer mouse, the localization operation may be moving a cursor of the computer mouse to a target with which a user desires to interact, and the triggering operation may be clicking with the computer mouse, for example, click with a left button or a right button, and single click or double click.

Methods and apparatuses to determine trigger intent of a user as such are known from the art. Document US4836670A1 for example discloses a system for eye movement detection that utilizes an infrared light emitting diode mounted coaxially in front of the lens of an infrared sensitive video camera for remotely making images of the eye of a computer operator. The reflected light causes bright eye effect which outlines the pupil as brighter than the rest of the eye and also causes an even brighter small glint from the surface of the cornea. The computer includes graphic processing which takes a video image, digitizes it into a matrix of pixels and analyzes the matrix. Using special algorithms the analysis determines the location of the pupil's center and the location of the glint relative to each other and with this information determines where the eye is gazing. If the eye-gaze is for a predetermined time at images in selected areas on the computer screen, the area is selected and results in actuation of other devices or the presentation of additional images on the screen. This is especially useable for handicapped persons to control their environment. Other uses include operator interfacing with workstations, cockpit controls and in industrial environments.

Alternatively, document US20150331485A1 discloses methods relating to calibrating an estimated gaze location. One example method comprises monitoring the estimated gaze location of a viewer using gaze tracking data from a gaze tracking system. Image data for display via a display device is received and, without using input from the viewer, at least one target visual that may attract a gaze of the viewer and a target location of the target visual are identified within the image data. The estimated gaze location of the viewer is compared with the target location of the target visual. An offset vector is calculated based on the estimated gaze location and the target location. The gaze tracking system is calibrated using the offset vector.

Alternatively, document CN106020591A discloses an eye-control widow movement technology capable of achieving human-computer interaction. Firstly, a user watches a certain position on a display screen for time longer than preset time, then, a new window is displayed, and a relationship between the window and the position exhibits adaptivity. The window contains a measurement watching position, arrows in different directions and parts of function keys. When the displayed measurement watching position is different from a real watching position, human eyes can be used for watching the arrows in different directions, the measurement watching position is regulated, and the window can be automatically regulated according to the watching position until the measurement watching position is consistent with the real watching position. Finally, the position of the function key is watched to realize a specific function.

Alternatively, document US20100205667A1 discloses computer systems for computer display privacy and security. In one aspect, the invention provides a computer-controlled system for regulating the interaction between a computer and a user of the computer based on the environment of the computer and the user. For example, the computer-controlled system provided by the invention comprises an input-output device including an image sensor configured to collect facial recognition data proximate to the computer. The system also includes a user security parameter database encoding security parameters associated with the user; the database is also configured to communicate with the security processor. The security processor is configured to receive the facial recognition data and the security parameters associated with the user, and is further configured to at least partially control the operation of the data input device and the data output device in response to the facial recognition data and the security parameters associated with the user.

Alternatively, document US9832452B1 discloses systems and approaches for robustly detecting and tracking a user. Image data can be captured and processed to provide an estimated position and/or orientation of the user. Other sensor data, such as from an accelerometer and/or gyroscope, can be determined for a more robust estimation of the user's position and/or orientation. Multiple user detection processes and/or motion estimation approaches and their corresponding confidence levels can also be combined to determine a final estimated position and orientation of the user. The multiple user pose estimations and/or motion estimations can be combined via an approach such as probabilistic system modeling and maximum likelihood estimation.

Document US2014372957 A1 discloses a head mounted display that allows user selection of a virtual object through multi-step focusing by the user. Focus on the selectable object is determined and then a validation object is displayed at a predetermined position in the vicinity of the selectable object. When user focus moves to the validation object, a timeout determines that a selection of the validation object, and thus the selectable object has occurred. The technology can be used in see through head mounted displays to allow a user to effectively navigate an environment with a multitude of virtual objects without unintended selections.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one aspect of the present invention, there is provided a user trigger intent determining method according to claim 1. Further embodiments are provided according to the further accompanying dependent claims.

In another aspect of the present invention, there is provided a non-transitory computer-readable storage medium according to claim 13.

In another aspect of the present invention, there is provided a user trigger intent determining apparatus according to accompanying claim 14.

Other features and aspects will be apparent from the following detailed description, the drawings, and the claims.

Although features of independent claims 1, 13 and 14 are sometimes referred to in the following detailed description as optional or preferred, it is understood that each feature included in the independent claims is a compulsory feature of the present invention.

BRIEF DESCRIPTION OF THE DRAWINGS

FIG. 1 is a diagram illustrating an example of triggering an event based on a gaze.
FIG. 2 is a diagram illustrating an example of a gaze estimation model.
FIG. 3 is a diagram illustrating an example of determining trigger intent of a user.
FIG. 4 is a diagram illustrating an example of a user trigger intent determining apparatus.
FIG. 5 is a diagram illustrating an example of a user trigger intent determining apparatus providing an interaction based on a gaze of a user.
FIG. 6 is a diagram illustrating an example of a user trigger intent determining apparatus performing an interaction.
FIG. 7 is a diagram illustrating an example of correcting a gaze location based on a deviation.
FIGS. 8 through 10 are diagrams illustrating examples of compensating an offset based on a keypoint.
FIG. 11 is a diagram illustrating an example of a neural network configured to extract a feature associated with a deviation from two images.
FIG. 12 is a diagram illustrating an example of executing an application.
FIG. 13 is a diagram illustrating an example of a user trigger intent determining apparatus triggering an event associated with an application group.
FIG. 14 is a diagram illustrating an example of a user trigger intent determining apparatus.
FIG. 15 is a diagram illustrating an example of a user trigger intent determining apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween. Likewise, similar expressions, for example, "between" and "immediately between," and "adjacent to" and "immediately adjacent to," are also to be construed in the same way.

As used herein, the term "and/or" includes any one and any combination of any two or more of the associated listed items.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Also, in the description of example embodiments, detailed description of structures or functions that are thereby known after an understanding of the disclosure of the present application will be omitted when it is deemed that such description will cause ambiguous interpretation of the example embodiments.

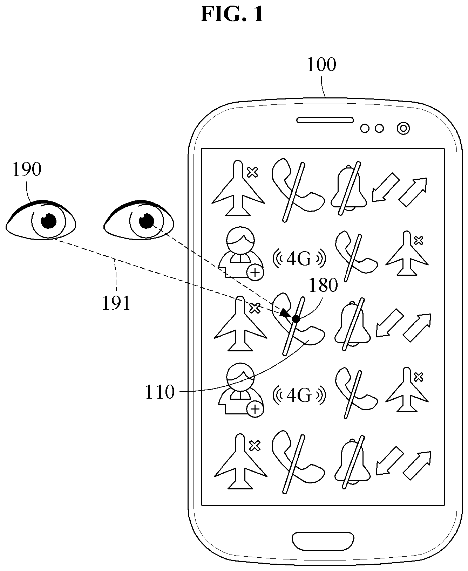

FIG. 1 is a diagram illustrating an example of triggering an event based on a gaze.

In a mobile environment, a gaze-based operation may be provided.

Referring to FIG. 1, a user trigger intent determining apparatus 100 determines a gaze location 180 of a user. The user trigger intent determining apparatus 100 triggers an event corresponding to the gaze location 180. The gaze location 180 indicates a location on a display at which a gaze 191 of eyes 190 of the user reaches. When a graphical representation 110, for example, an icon, is displayed at the gaze location 180, the user trigger intent determining apparatus 100 triggers an event assigned to the graphical representation 110. For example, the user trigger intent determining apparatus 100 may execute an application corresponding to the graphical representation 110.

In an example, to be convenient in operation, the user trigger intent determining apparatus 100 may estimate a gaze location with an error less than a distance, for example, of approximately 1.5 centimeters (cm), between graphical representations displayed adjacent to each other on the display.

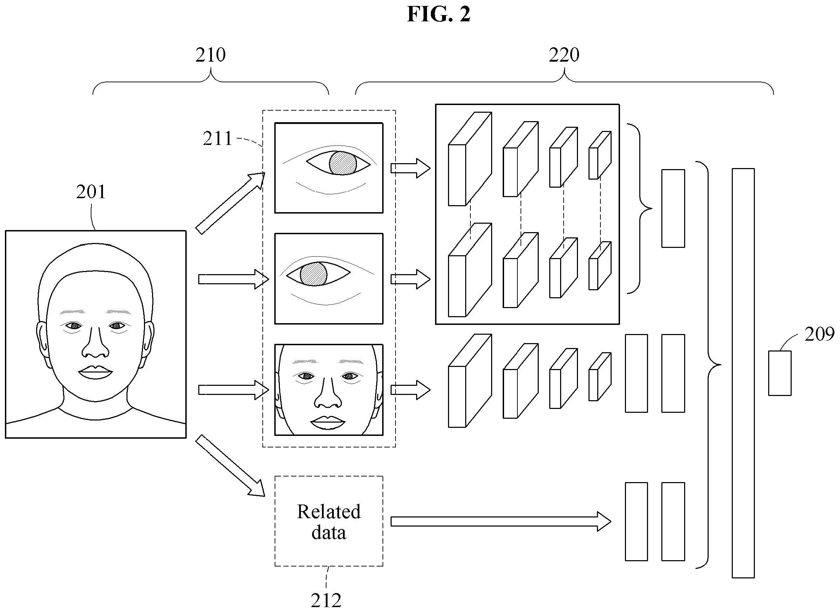

FIG. 2 is a diagram illustrating an example of a gaze estimation model.

Referring to FIG. 2, a user trigger intent determining apparatus estimates a gaze from an input image 201 based on a gaze estimation model 220. The user trigger intent determining apparatus obtains the input image 201 through an image sensor. In an example, the image sensor is a red, green, blue (RGB) sensor and the input image 201 is an RGB image. However, other types of input image 201, such as, for example, a near-infrared data or a depth data are considered to be well within the scope of the present disclosure.

In an example, the user trigger intent determining apparatus may estimate a gaze direction of a human eye and a gaze location on a display by analyzing an image including a face, for example, an area around the eye.

The user trigger intent determining apparatus obtains a plurality of partial images 211 and related data 212 by preprocessing 210 the input image 201. The partial images 211 may include, for example, a left eye image, a right eye image, and a face image as illustrated in FIG. 2.

For example, the user trigger intent determining apparatus may obtain an identifying keypoint using a face identifying keypoint localization algorithm. In this example, identifying keypoints refer to points of contours of, such as, for example, eyes, nose, mouth, and cheek. In an example, the user trigger intent determining apparatus extracts the left eye image, the right eye image, and the face image from the input image 201 based on location information of identifying keypoints. In an example, the user trigger intent determining apparatus adjusts sizes of the partial images 211 to a same size. For example, the user trigger intent determining apparatus may extract an eye image by selecting an eye-related area from the input image 201 at a set ratio based on two canthi, for example, both corners of an eye. In the example illustrated in FIG. 2, the related data 212 indicates numerical data associated with a gaze location 209.

The related data 212 may include data such as, for example, a distance between both eyes, a size of the face, and an offset of the face. The distance between both eyes and the face size may be determined based on an object shape which is different for each object, and a distance between a face and a camera. The face offset may indicate a position of the face image in the input image 201 to which relative positions of the camera and the face are applied.

In addition, the user trigger intent determining apparatus transmits data obtained by preprocessing 210 the input image 201, for example, the partial images 211 and the related data 212, to the gaze estimation model 220. The gaze estimation model 220 may be embodied by, for example, a neural network. The neural network may have various structures such as a deep neural network (DNN), a recurrent neural network (RNN), a recurrent DNN (RDNN), a Gaussian mixture model (GMM), or an n-layer neural network, and a bidirectional long short-term memory (BLSTM). The DNN or n-layer neural network may correspond to a convolutional neural network (CNN), a recurrent neural network (RNN), a deep belief network, a fully connected network, a bi-directional neural network, or a restricted Boltzman machine, or may include different or overlapping neural network portions respectively with full, convolutional, recurrent, and/or bi-directional connections. A machine learning structure on which the gaze estimation model is implemented is not limited thereto, and the gaze estimation model may be implemented in a form of combination of at least one or more of the structures of the GMM, DNN, and the BLSTM.

The neural network includes a plurality of layers. For example, the neural network includes an input layer, at least one hidden layer, and an output layer. The input layer receives input data and transmits the input data to the hidden layer, and the output layer generates output data based on signals received from nodes of the hidden layer. In an example, the neural network has a structure having a plurality of layers including an input, feature maps, and an output. In the neural network, a convolution operation is performed on the input source sentence with a filter referred to as a kernel, and as a result, the feature maps are output. The convolution operation is performed again on the output feature maps as input feature maps, with a kernel, and new feature maps are output. When the convolution operation is repeatedly performed as such, a recognition result with respect to features of the input source sentence may be finally output through the neural network.

The user trigger intent determining apparatus estimates a final localization result, for example, the gaze location 209 on the display, from the partial images 211 and the related data 212 based on the gaze estimation model 220. For example, the user trigger intent determining apparatus may extract feature data through a plurality of convolutional layers, fully-connected (FC) layers, and nonlinear layers, which are included in the gaze estimation model 220, and estimate the gaze location 209 based on the extracted feature data.

In an example, the user trigger intent determining apparatus may accurately estimate a gaze of a user to trigger an event based on an intent of the user without an error. In this example, the user is not limited to a human being, but may indicate all objects that desire to trigger an event based on an interaction. For example, in a case in which the user trigger intent determining apparatus is disposed in front of a feed injection facility constructed for livestock raising, the user trigger intent determining apparatus may allow the injection of grass, feed, or water when an animal, for example, a cow, gazes at a grass icon, a feed injection icon, or a water icon that is displayed on a display, and thereby realize automated livestock raising.

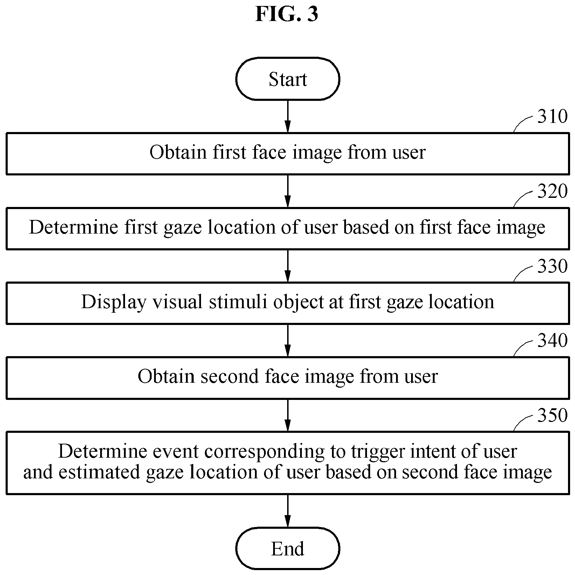

FIG. 3 is a diagram illustrating an example of determining trigger intent of a user. The operations in FIG. 3 may be performed in the sequence and manner as shown, although the order of some operations may be changed or some of the operations omitted without departing from the scope of the illustrative examples described. Many of the operations shown in FIG. 3 may be performed in parallel or concurrently. One or more blocks of FIG. 3, and combinations of the blocks, can be implemented by special purpose hardware-based computers that perform the specified functions, or combinations of special purpose hardware and computer instructions. In addition to the description of FIG. 3 below, the descriptions of FIGS. 1-2 are also applicable to FIG. 3.

Referring to FIG. 3, in operation 310, a user trigger intent determining apparatus obtains at least one first face image from a user.

In operation 320, the user trigger intent determining apparatus determines a first gaze location of the user based on the at least one first face image.

In an example, the user trigger intent determining apparatus may determine whether an eye movement of the user is stopped based on the first face image. When it is determined that the eye movement is stopped, the user trigger intent determining apparatus may calculate the first gaze location of the user based on a portion of the first face image. That is, the user trigger intent determining apparatus may determine the first gaze location of the user based on a first face image after the eye movement is stopped.

For example, the user trigger intent determining apparatus may obtain a plurality of first face images from a user. The first face images may include an image captured before an eye movement of the user is stopped, and an image captured after the eye movement is stopped. The first face images may be a plurality of frame images, and the eye movement of the user may be determined to be stopped from an n-th frame image. In an example, n denotes an integer greater than or equal to 2. The user trigger intent determining apparatus may calculate a first gaze location of the user based on subsequent frame images starting from the n-th frame image. The first gaze location may be calculated through various gaze location calculating methods. For another example, the first face image may include only an image captured after the eye movement is stopped. In this example, the user trigger intent determining apparatus may determine the first gaze location based on a first face image of the stopped eye movement.

For example, the user may discover an application the user desires to execute in a mobile terminal, for example, a smartphone, with an eye of the user, by gazing at a display of the mobile terminal. In this example, before discovering the application, the eye of the user, for example, a pupil of the eye, may continue to move. After discovering the application, the user may gaze at the application for a certain amount of time, for example, 200 milliseconds (ms) to 300 ms. As described above, the user trigger intent determining apparatus may estimate a coarse location of an icon on the display corresponding to the application to be executed based on the first face image captured after the eye movement of the user is stopped.

In operation 330, the user trigger intent determining apparatus displays a visual stimuli object at the determined first gaze location. The visual stimuli object refers to an object that draws an attention from a user, and may be visualized and displayed as various graphical representations. For example, the visual stimuli object may be displayed as an icon of a certain form, for example, a cursor and a hand-shaped icon.

In an example, the user trigger intent determining apparatus may determine a visual stimuli object based on a user preference. The user trigger intent determining apparatus may receive, from the user, a user input indicating the user preference. The user trigger intent determining apparatus may generate the visual stimuli object based on a color, a shape, a size, a transparency level, and a visualization type that correspond to the user preference. The visualization type may include actions such as, for example, a brightness at which the visual stimuli object is displayed, and fade-in, fade-out, and animation effects. For example, the user trigger intent determining apparatus may display, on a display, the visual stimuli object as a semitransparent graphical representation or an opaque graphical representation. The user trigger intent determining apparatus may display the visual stimuli object to overlay a graphical representation of another object on the display.

In another example, the user trigger intent determining apparatus may determine a visual stimuli object based on a user preference, user information, device information, and surroundings. For example, the user trigger intent determining apparatus may determine a shape, a size, a color, and a visualization type of a graphical representation based on a current location, for example, a geographical location, of the user, device state information, surroundings of the user, and information associated with an application to be triggered. In an example, this determination may be automatic.

For example, when a distance between the user and the display is detected to be greater than a threshold maximum distance, the user trigger intent determining apparatus may increase a size and a brightness of a graphical representation corresponding to the visual stimuli object. Thus, the user trigger intent determining apparatus may more readily draw an attention from the user towards the visual stimuli object, and more accurately guide a gaze of the user to the visual stimuli object.

For example, the device state information may include information associated with an amount of power stored in the user trigger intent determining apparatus. For example, in a case in which the amount of power stored in the user trigger intent determining apparatus is detected to be less than a threshold amount of power, the user trigger intent determining apparatus may decrease a brightness of the visual stimuli object, and thus, reduce power consumption.

For example, in a case in which a brightness of the surroundings is greater than a threshold brightness, the user trigger intent determining apparatus may increase a brightness of a graphical representation corresponding to the visual stimuli object. Thus, the user trigger intent determining apparatus may provide the user with more comfortable visibility while more readily drawing an attention from the user towards the visual stimuli object and guiding a gaze of the user to the visual stimuli object.

For example, the user trigger intent determining apparatus may determine a size of the visual stimuli object based on a size of a graphical representation, for example, an icon, which indicates an application corresponding to the first gaze location. For example, in a case in which a size of an icon of an application corresponding to an initially estimated first gaze location is less than a threshold size, the user trigger intent determining apparatus may decrease a size of the visual stimuli object.

When the visual stimuli object appears on the display, the user may unconsciously glance at the visual stimuli object, and continue gazing at the visual stimuli object for a certain amount of time, for example, 200 ms to 300 ms.

In operation 340, the user trigger intent determining apparatus obtains at least one second face image from the user.

In operation 350, the user trigger intent determining apparatus determines an event corresponding to a trigger intent of the user and an estimated final gaze location of the user based on the second face image.

The user trigger intent determining apparatus corrects the first gaze location based on the second face image to obtain the estimated final gaze location of the user. For example, the user trigger intent determining apparatus may estimate a second gaze location from the second face image, and determine the final gaze location by correcting the first gaze location based on the second gaze location.

For example, the user trigger intent determining apparatus may display the visual stimuli object at an actual location on the display at which the user gazes. The user trigger intent determining apparatus may already obtain a location on the display at which the visual stimuli object is to be displayed. The user trigger intent determining apparatus may obtain a new gaze location, for example, the second gaze location, based on a gaze of the user at the visual stimuli object, and estimate a final gaze location by correcting an initial gaze location, for example, the first gaze location, based on the new gaze location. Thus, the user trigger intent determining apparatus may more rapidly and accurately estimate the final gaze location of the user.

In addition, the user trigger intent determining apparatus may determine whether an eye movement of the user is stopped to calculate the second gaze location. The user trigger intent determining apparatus may select a frame image captured after the eye movement is stopped from among the second face image frames. The user trigger intent determining apparatus may calculate the second gaze location based on a second face image captured after the eye movement is stopped.

The user trigger intent determining apparatus calculates a deviation in gaze location from the first face image and the second face image. The user trigger intent determining apparatus corrects the first gaze location based on the deviation. The corrected first gaze location corresponds to the final gaze location.

For example, the user trigger intent determining apparatus may determine the second gaze location of the user based on the second face image. The user trigger intent determining apparatus may calculate a deviation between the first gaze location and the second gaze location as the deviation in gaze location from the first face image and the second face image.

For example, the user trigger intent determining apparatus may calculate the deviation based on identifying keypoints of the first face image and the second face image. The user trigger intent determining apparatus may select at least one identifying keypoint from the first face image. The user trigger intent determining apparatus may select at least one corresponding identifying keypoint from the second face image. In this example, the number of the identifying keypoint selected from the first face image and the number of the corresponding identifying keypoint selected from the second face image may be the same. The user trigger intent determining apparatus may calculate a corresponding deviation value between the identifying keypoint and the corresponding identifying keypoint. The user trigger intent determining apparatus may estimate the deviation in gaze location from the first face image and the second face image based on the corresponding deviation value. In this example, identifying keypoints may be points of contours of facial features such as, for example, eyes, a nose, a mouth, and a cheek.

In an example, the user trigger intent determining apparatus may estimate the deviation in gaze location from the first face image and the second face image based on a gaze deviation estimation model. The gaze deviation estimation model may refer to a model designed to estimate a deviation between gaze locations of two images from the two images. For example, the gaze deviation estimation model may be trained to output a reference deviation from two reference images. For example, the user trigger intent determining apparatus may train the gaze deviation estimation model to obtain the deviation in gaze location from the first face image and the second face image, based on the corresponding deviation value.

The user trigger intent determining apparatus may normalize the corresponding deviation value, and then train the gaze deviation estimation model using the normalized corresponding deviation value.

For example, the user trigger intent determining apparatus may extract the deviation from the first face image and the second face image using a neural network. The neural network may have various structures such as a deep neural network (DNN), a recurrent neural network (RNN), a recurrent DNN (RDNN), a Gaussian mixture model (GMM), or an n-layer neural network, and a bidirectional long short-term memory (BLSTM). The DNN or n-layer neural network may correspond to a convolutional neural network (CNN), a recurrent neural network (RNN), a deep belief network, a fully connected network, a bi-directional neural network, or a restricted Boltzman machine, or may include different or overlapping neural network portions respectively with full, convolutional, recurrent, and/or bi-directional connections. A machine learning structure on which the gaze deviation estimation model is implemented is not limited thereto, and the gaze deviation estimation model may be implemented in a form of combination of at least one or more of the structures of the GMM, DNN, and the BLSTM.

The neural network includes a plurality of layers. For example, the neural network includes an input layer, at least one hidden layer, and an output layer. The input layer receives input data and transmits the input data to the hidden layer, and the output layer generates output data based on signals received from nodes of the hidden layer. In an example, the neural network has a structure having a plurality of layers including an input, feature maps, and an output. In the neural network, a convolution operation is performed on the input source sentence with a filter referred to as a kernel, and as a result, the feature maps are output. The convolution operation is performed again on the output feature maps as input feature maps, with a kernel, and new feature maps are output. When the convolution operation is repeatedly performed as such, a recognition result with respect to features of the input source sentence may be finally output through the neural network.

The user trigger intent determining apparatus triggers the event corresponding to the estimated final gaze location of the user. The user trigger intent determining apparatus determines the trigger intent of the user based on a determination of the estimated final gaze location of the user. When the trigger intent is determined, the user trigger intent determining apparatus may trigger the event corresponding to the estimated final gaze location. For example, the user trigger intent determining apparatus may determine a gaze location of the user based on a gaze of the user at the visual stimuli object, and execute an application corresponding to the determined gaze location. Thus, the user may conveniently and rapidly execute an application with a gaze.

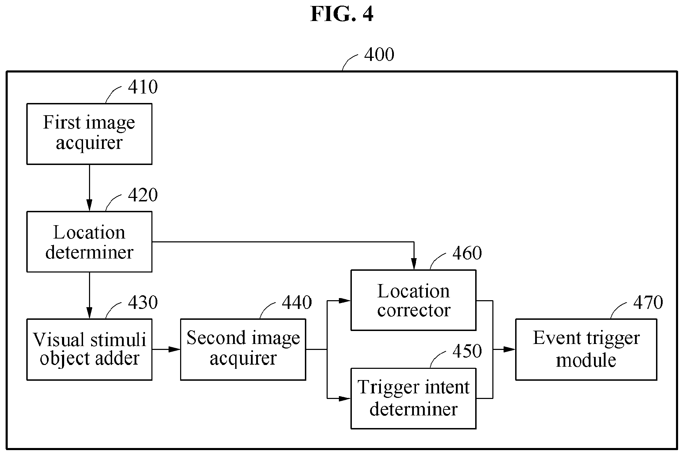

FIG. 4 is a diagram illustrating an example of a user trigger intent determining apparatus.

Referring to FIG. 4, a user trigger intent determining apparatus 400 includes a first image acquirer 410, a location determiner 420, a visual stimuli object adder 430, a second image acquirer 440, and a trigger intent determiner 450.

The first image acquirer 410 may obtain at least one first face image from a user. The first image acquirer 410 may be an image sensor. The image sensor may be, for example, a camera or a video camera configured to capture an image. For example, the first image acquirer 410 may include a receiver configured to receive an image captured by an external device, and a retriever configured to retrieve an image from a memory storing captured images.

For example, when the first image acquirer 410 is a camera, the first image acquirer 410 may capture an image under various trigger conditions. The first image acquirer 410 may capture an image in response to a gaze-based interaction. For example, when a distance between a face of the user and a lens of the camera being less than a threshold minimum distance, the first image acquirer 410 may obtain an image.

The location determiner 420 may determine a first gaze location of the user based on the first face image. For example, when an eye movement of the user stops, the location determiner 420 may calculate the first gaze location of the user based on a portion of the first face image. For example, the location determiner 420 may determine the first gaze location of the user based on a first face image captured after the eye movement is stopped. In this example, a plurality of first face images may be a plurality of frame images, and the eye movement of the user may be determined to be stopped since an n-th frame image. The location determiner 420 may calculate the first gaze location of the user based on subsequent frame images starting from the n-th frame image.

The visual stimuli object adder 430 may display a graphical representation corresponding to a visual stimuli object at the determined first gaze location. The visual stimuli object adder 430 may determine the graphical representation corresponding to the visual stimuli object based on any one or any combination of a user preference, user information, device information, and surroundings. In an example, visual stimuli object adder 430 may display the graphical representation.

The second image acquirer 440 may obtain at least one second face image. In an example, the second image acquirer 440 and the first image acquirer 410 may be embodied as a same image sensor. However, examples are not limited to the example described in the foregoing, and thus the second image acquirer 440 and the first image acquirer 410 may be embodied as different image sensors.

The trigger intent determiner 450 may determine an event corresponding to a trigger intent of the user and an estimated final gaze location of the user based on the second face image.

In addition, the user trigger intent determining apparatus 400 further includes a location corrector 460 and an event trigger module 470.

The location corrector 460 may correct the first gaze location based on the second face image to obtain the estimated final gaze location of the user. For example, the location corrector 460 may calculate a deviation in gaze location from the first face image and the second face image, and correct the first gaze location using the deviation.

In an example, the location determiner 420 may determine a second gaze location of the user based on the second face image. The location corrector 460 may calculate a deviation between the first gaze location and the second gaze location as the deviation in gaze location from the first face image and the second face image. For example, the location corrector 460 may select at least one identifying keypoint from the first face image and at least one corresponding identifying keypoint from the second face image, and obtain a gaze deviation estimation model based on a corresponding deviation value between the identifying keypoint and the corresponding identifying keypoint. In an example, the location corrector 460 may estimate the deviation in gaze location from the first face image and the second face image through the gaze deviation estimation model. The location corrector 460 may normalize the corresponding deviation value, and obtain the gaze deviation estimation model based on the normalized corresponding deviation value. The gaze deviation estimation model may include a DNN.

The event trigger module 470 may trigger the event corresponding to the estimated final gaze location of the user. For example, when the trigger intent of the user is determined, the event trigger module 470 may automatically trigger the event corresponding to the estimated final gaze location.

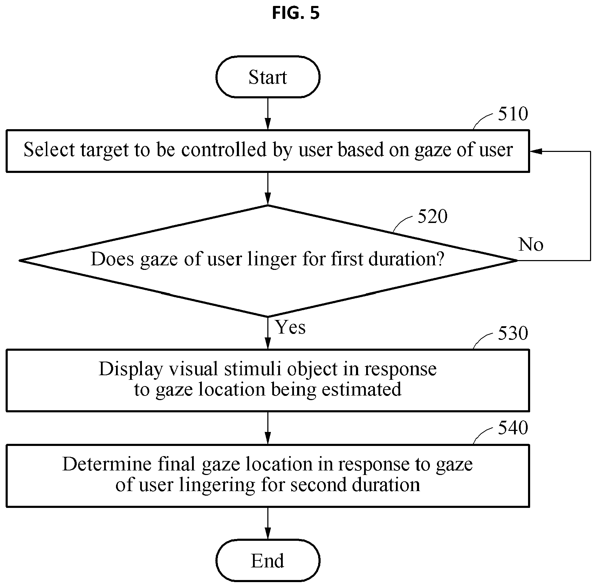

FIG. 5 is a diagram illustrating an example of a user trigger intent determining apparatus providing an interaction based on a gaze of a user. The operations in FIG. 5 may be performed in the sequence and manner as shown, although the order of some operations may be changed or some of the operations omitted without departing from the scope of the illustrative examples described. Many of the operations shown in FIG. 5 may be performed in parallel or concurrently.

8

One or more blocks of FIG. 5, and combinations of the blocks, can be implemented by special purpose hardware-based computer that perform the specified functions, or combinations of special purpose hardware and computer instructions. In addition to the description of FIG. 5 below, the descriptions of FIGS. 1-4 are also applicable to FIG. 5, and are incorporated herein by reference. Thus, the above description may not be repeated here.

Referring to FIG. 5, in operation 510, a user trigger intent determining apparatus selects a target to be controlled by a user based on a gaze of the user. In an example, "gaze" includes a glance, when the glance lingers for an amount of time. The user trigger intent determining apparatus may estimate a current gaze location of the user through a localization or positioning algorithm based on collected face images.

In operation 520, the user trigger intent determining apparatus determines whether a gaze of the user lingers for a first duration. The user trigger intent determining apparatus may collect a plurality of face images during the first duration, such as, for example, 200 ms ~ 300 ms. When the gaze lingers for the first duration, the user trigger intent determining apparatus may process the face images collected during the first duration. In an example, the user trigger intent determining apparatus may skip an operation of estimating a gaze location in operation 510. When the gaze of the user is determined to linger for longer than the first duration in operation 520, the user trigger intent determining apparatus may estimate a gaze location.

In operation 530, when the gaze location is estimated, the user trigger intent determining apparatus displays a visual stimuli object. For example, the user trigger intent determining apparatus may display, on a display, a single cursor of a certain type as a single small visual stimuli object. The user may then gaze at the visual stimuli object that newly appears on the display.

In operation 540, when a gaze of the user lingers for a second duration, the user trigger intent determining apparatus determines a final gaze location. The user trigger intent determining apparatus may determine whether the gaze of the user lingers for the second duration, such as, for example, 200 ms ~ 300 ms. The user trigger intent determining apparatus may estimate a gaze location, for example, a second gaze location, when the user gazes at the visual stimuli object. The user trigger intent determining apparatus may determine the final gaze location by correcting a first gaze location estimated in operation 520 or 510 based on the second gaze location.

For example, the user trigger intent determining apparatus may use a gaze at the visual stimuli object as a single trigger operation. In response to the gaze at the visual stimuli object, the user trigger intent determining apparatus may trigger an event. The user trigger intent determining apparatus may determine an event corresponding to a gaze location intended by the user, for example, an event the user desires to trigger, based on an image captured by the user trigger intent determining apparatus when the user gazes at the visual stimuli object.

In an example not forming part of the present invention, another triggering method may be included in operation 540. In an example, the other triggering method may include, for example, a triggering method performed in conjunction with another input device, an anti-saccade reverse fast motion-based method, a gaze gesture-based method, and a smooth pursuit oculomotor control kit (SPOCK) motion icon follow method. The triggering method performed in conjunction with another input device, for example, a keyboard, a joystick, and a mouse, may trigger an event corresponding to a finally estimated gaze location in response to an input received from the other input device. The anti-saccade reverse fast motion-based method may display a single separate icon on an opposite side of a target and complete triggering when a gaze of a user moves to another side. The gaze gesture-based method may complete triggering when a gaze of a user has a certain pattern, for example, a blink of an eye and a movement along a displayed pattern. The SPOCK motion icon follow method may indicate two moving icons on both sides of a target and move them in opposite directions, and complete triggering when a gaze of a user follows one of the moving icons.

In another example, although the gaze location obtained in operation 510 and the gaze location obtained in operation 540 are the same after the visual stimuli object is displayed for a preset amount of time, the user trigger intent determining apparatus may determine an event the user desires to trigger based on a gaze location intended by the user.

For the user, operation 510 may be a localization operation, and operations 520, 530, and 540 may be a triggering operation. The two durations needed for a gaze to linger in operations 520 and 540 may be relatively short. The user trigger intent determining apparatus may trigger the event after performing operations 520, 530, and 540, and thus, the user may not confuse the localization operation and the triggering operation although the duration is as short as 200 ms or 300 ms. In addition, a total triggering time may be shorter. For example, a time used for the user to gaze at a new visual stimuli object in operation 530 may last for 200 ms to 300 ms, but in another example may last only 20 ms to 40 ms. Thus, a time to be used to estimate a gaze and determine whether to trigger an event may be short.

In an example, the user trigger intent determining apparatus may help resolve an issue of Midas touch. The Midas touch may indicate an issue that is difficult to distinguish the triggering operation and the gaze estimation operation only by a gaze interaction. For example, a dwell time triggering method, or a lingering time triggering method described above, may mistake, as the triggering operation, a state in which the user suddenly lose concentration and thus a gaze of the user lingers for a while.

In an example, the user trigger intent determining apparatus may improve user convenience by dividing the triggering operation into a plurality of steps. For example, the user may not need to gaze at a location on the display for a long time, and thus the user may be relieved of eye strain or fatigue. In addition, when the visual stimuli object is displayed on the display in operation 530, the user may naturally see the visual stimuli object without an additional guide.

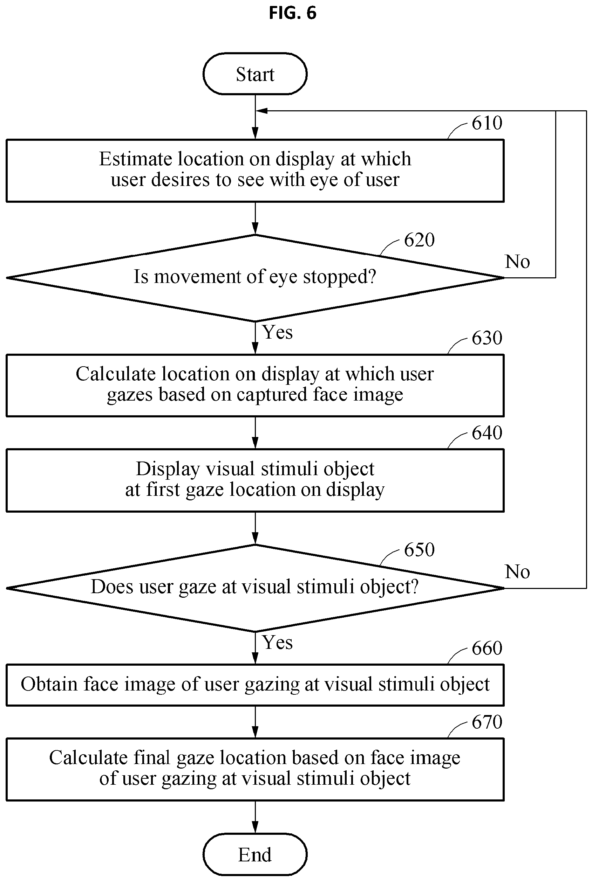

FIG. 6 is a diagram illustrating an example of a user trigger intent determining apparatus performing an interaction. The operations in FIG. 6 may be performed in the sequence and manner as shown, although the order of some operations may be changed or some of the operations omitted without departing from the scope of the illustrative examples described. Many of the operations shown in FIG. 6 may be performed in parallel or concurrently. One or more blocks of FIG. 6, and combinations of the blocks, can be implemented by special purpose hardware-based computer that perform the specified functions, or combinations of special purpose hardware and computer instructions. In addition to the description of FIG. 6 below, the descriptions of FIGS. 1-5 are also applicable to FIG. 6, and are incorporated herein by reference. Thus, the above description may not be repeated here.

Referring to FIG. 6, in operation 610, a user trigger intent determining apparatus estimates a location on a display at which a user desires to see with an eye of the user.

In operation 620, the user trigger intent determining apparatus determines whether an eye movement of the user is stopped. The user trigger intent determining apparatus determines whether the eye movement is stopped for a relatively short duration, for example, 200 ms to 300 ms. For example, the user trigger intent determining apparatus may determine whether the eye movement is stopped based on a comparison of frame images. When a gaze of the user lingers for a first duration, the user trigger intent determining apparatus may determine that the eye movement of the user is stopped.

In operation 630, the user trigger intent determining apparatus calculates a location on the display at which the user gazes based on a captured face image. For example, the user trigger intent determining apparatus may determine a first gaze location based on an image of an area around an eye of the user in the face image. The first gaze location may be calculated as coordinates $(x0, y0)$. The calculation of the first gaze location may be performed through various algorithms. When the gaze of the user lingers for the first duration, the user trigger intent determining apparatus may calculate the first gaze location based on a first face image of the at least one first face image corresponding to the first duration time.

In an example, the user trigger intent determining apparatus may obtain an RGB image as the face image. The RGB image may include a red channel image, a green channel image, and a blue channel image. The user trigger intent determining apparatus may obtain the RGB image using an RGB camera. However, an image sensor is not limited thereto, and thus an infrared sensor, a near infrared sensor, and a depth sensor may also be used.

In operation 640, the user trigger intent determining apparatus displays a visual stimuli object at the first gaze location on the display. For example, the user trigger intent determining apparatus may display the visual stimuli object, for example, a cursor of a certain type, on the coordinate $(x0, y0)$ on the display. In response to a user input, the user trigger intent determining apparatus may determine a graphical representation of the visual stimuli object to be of a shape, a size, and a visualization type, for example, a brightness, which are desired by the user.

In operation 650, the user trigger intent determining apparatus determines whether the user gazes at the visual stimuli object that newly appears on the display for longer than a preset amount of time, for example, a second duration. For example, the user trigger intent determining apparatus may determine whether an eye movement of the user is stopped based on at least one second face image. In response to the gaze of the user lingering for the second duration, the user trigger intent determining apparatus may determine that the eye movement of the user is stopped.

In operation 660, the user trigger intent determining apparatus obtains a face image of the user gazing at the visual stimuli object. When it is determined that the eye movement is stopped, the user trigger intent determining apparatus may calculate a second gaze location of the user based on the at least one second face image. For example, when it is determined that the user gazes at the visual stimuli object for longer than the second duration, the user trigger intent determining apparatus may obtain an image of an area around the eye of the user. When the gaze of the user lingers for the second duration, the user trigger intent determining apparatus may calculate the second gaze location of the user based on a second face image of the at least one second face image corresponding to the second duration.

In operation 670, the user trigger intent determining apparatus calculates a final gaze location based on the face image of the user gazing at the visual stimuli object. The user trigger intent determining apparatus determines the final gaze location to be a new gaze location, for example, coordinates $(x1, y1)$, based on the face image obtained in operation 660. The final gaze location corresponds to a location at which the user initially intended to gaze, for example, the location in operation 610. The coordinates $(x1, y1)$ of the newly estimated gaze location is more accurate than the coordinates $(x0, y0)$ estimated in operation 630. This is because the user trigger intent determining apparatus uses a greater amount of information in operation 670 than in operation 630. In addition, this is because a location at which the visual stimuli object is displayed is given to the user trigger intent determining apparatus. When the user gazes at the visual stimuli object, the user trigger intent determining apparatus may accurately determine an actual location of the visual stimuli object, for example, coordinates $(x0, y0)$. The visual stimuli object is a single calibration object, and the user trigger intent determining apparatus uses the calibration object to improve accuracy in estimation. Hereinafter, how accuracy in estimation is improved through a visual stimuli object will be described in further details.

For example, when the visual stimuli object is displayed for an amount of time, for example, 200 ms to 300 ms, the user may generally and unconsciously gaze at a visually stimulating object appearing around a point at which the user previously gazes. The user trigger intent determining apparatus may capture a face image of the user at this time. Thus, the user trigger intent determining apparatus may prevent a triggering operation that may be caused when the user suddenly loses concentration and gazes at a wrong point.

In an example, the user trigger intent determining apparatus may obtain a face image after an amount of time for which the user gazes at the visual stimuli object exceeds a threshold time, for example, 200 ms to 300 ms.

In another example, the user trigger intent determining apparatus may continuously capture a face image during a time for which the visual stimuli object is displayed, even before the threshold time elapses. The user trigger intent determining apparatus may calculate a new gaze location based on a change in frame image. In addition, the user trigger intent determining apparatus may calculate a new gaze location at each time interval. Herein, the time interval may be configurable. The new gaze location calculated in operation 670 and the location calculated in operation 630 may be the same, or different from each other.

A time length of each the first duration and the second duration may vary based on a design.

Hereinafter, how an accurate estimation result is obtained in operation 670 will be described in further details.

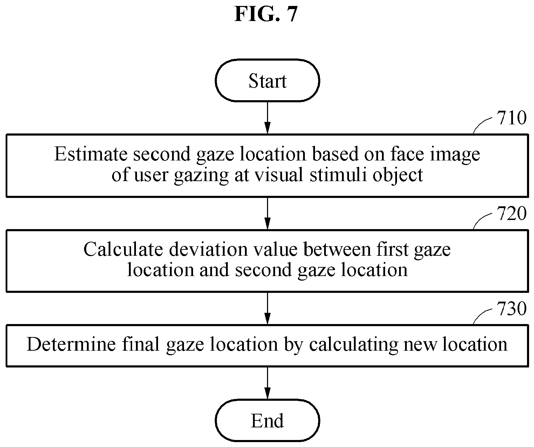

FIG. 7 is a diagram illustrating an example of correcting a gaze location based on a deviation. The operations in FIG. 7 may be performed in the sequence and manner as shown, although the order of some operations may be changed or some of the operations omitted without departing from the scope of the illustrative examples described. Many of the operations shown in FIG. 7 may be performed in parallel or concurrently. One or more blocks of FIG. 7, and combinations of the blocks, can be implemented by special purpose hardware-based computer that perform the specified functions, or combinations of special purpose hardware and computer instructions. In addition to the description of FIG. 7 below, the descriptions of FIGS. 1-6 are also applicable to FIG. 7, and are incorporated herein by reference. Thus, the above description may not be repeated here.

In an example, a user trigger intent determining apparatus may obtain a single estimation result (x', y') based on a subsequently obtained face image. For example, the subsequently obtained face image may be an image obtained after a visual stimuli object is displayed. Based on this face image, the user trigger intent determining apparatus may determine that a user actually gazes at coordinates (x0, y0). For example, the user trigger intent determining apparatus may calculate a deviation estimated in operation 630 to be (x'-x0, y'-y0). In general, an estimation result, for example, (x0, y0), obtained based on an initially obtained face image, and the estimation result (x', y') obtained based on the subsequently obtained face image may have a similar deviation. Thus, the user trigger intent determining apparatus uses the deviation estimated for the subsequently obtained face image to correct the estimation result for the initially obtained face image. The user trigger intent determining apparatus may obtain coordinates (x0-(x'-x0), y0-(y'-y0)) as a new estimation result for a gaze location of the user. The new estimation result is more accurate than the initial estimation result, for example, the coordinates (x0, y0). In an example, the user trigger intent determining apparatus may correct a first gaze location through the following operations.

Referring to FIG. 7, in operation 710, the user trigger intent determining apparatus estimates a second gaze location based on a face image of a user gazing at a visual stimuli object, for example, a second image. For example, the user trigger intent determining apparatus may estimate a single gaze location, for example, coordinates (x', y'), based on a face image obtained in operation 660. The user trigger intent determining apparatus may estimate a gaze location using a method described above with reference to FIG. 2, or another method used to determine a gaze location.

In operation 720, the user trigger intent determining apparatus calculates a corresponding deviation value between the first gaze location and the second gaze location. The deviation value may indicate a difference between an actual gaze location, which is a location at which the user actually gazes, and an estimated second gaze location. For example, when the user gazes at the visual stimuli object, the actual gaze location of the user with respect to the visual stimuli object may be coordinates (x0, y0). In this example, the second gaze location estimated from the second image may be coordinates (x', y'). In this example, the deviation value (dx, dy) may be (x'-x0, y'-y0), for example, (dx, dy) = (x'-x0, y'-y0). The first gaze location estimated from a first image, a location at which the visual stimuli object is displayed, and the actual gaze location of the user with respect to the visual stimuli object may all be (x0, y0).

In operation 730, the user trigger intent determining apparatus determines a final gaze location by calculating a new location. The user trigger intent determining apparatus corrects an initial gaze location, for example, the first gaze location (x0, y0), based on the deviation value, for example (dx, dy). The final gaze location may be, for example, (x0-dx, y0-dy).

Herein, a difference between actual locations at which the user gazes at two times in operation 630 and 660 is not great, and thus deviations of estimation results obtained through a same algorithm may be relatively similar. Thus, the user trigger intent determining apparatus may correct the estimation result obtained in operation 630 using the deviation (dx, dy) in operation 660.

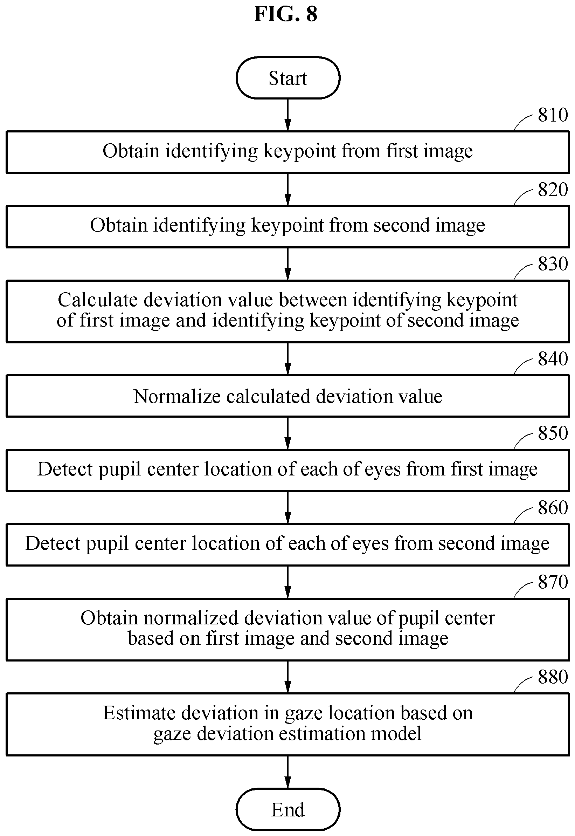

FIGS. 8 through 10 are a diagrams illustrating examples of compensating an offset based on a keypoint.

In an example, a user trigger intent determining apparatus may estimate an offset in gaze location, for example, (dx, dy), based on an eye movement and a head movement in two images. For example, the user trigger intent determining apparatus may determine an image obtained in operation 630 to be a first image, and an image obtained in operation 660 to be a second image. When the second image is obtained, the user trigger intent determining apparatus may obtain coordinates (x0-dx, y0-dy) as a new estimation result by compensating for an offset for the coordinates (x0, y0) of a first gaze location estimated from the first image.

The user trigger intent determining apparatus may use various offset determining methods. For example, the user trigger intent determining apparatus may detect locations of identifying keypoints, for example, points of canthi and a point of a center of an eye, in the two images. The user trigger intent determining apparatus may extract an offset of the identifying keypoints as a feature, and obtain the offset through a regression algorithm. Herein, the regression algorithm may include a support vector regression (SVR), for example. To the regression algorithm, information about, for example, a distance between an eye and a display and a facial posture, may be input.

The operations in FIG. 8 may be performed in the sequence and manner as shown, although the order of some operations may be changed or some of the operations omitted without departing from the scope of the illustrative examples described. Many of the operations shown in FIG. 8 may be performed in parallel or concurrently. One or more blocks of FIG. 8, and combinations of the blocks, can be implemented by special purpose hardware-based computer that perform the specified functions, or combinations of special purpose hardware and computer instructions. In addition to the description of FIG. 8 below, the descriptions of FIGS. 1-7 are also applicable to FIG. 8, and are incorporated herein by reference. Thus, the above description may not be repeated here.

Referring to FIG. 8, in operation 810, the user trigger intent determining apparatus obtains an identifying keypoint from the first image. For example, the user trigger intent determining apparatus may apply a face keypoint localization algorithm to the first image to obtain a keypoint of a face.

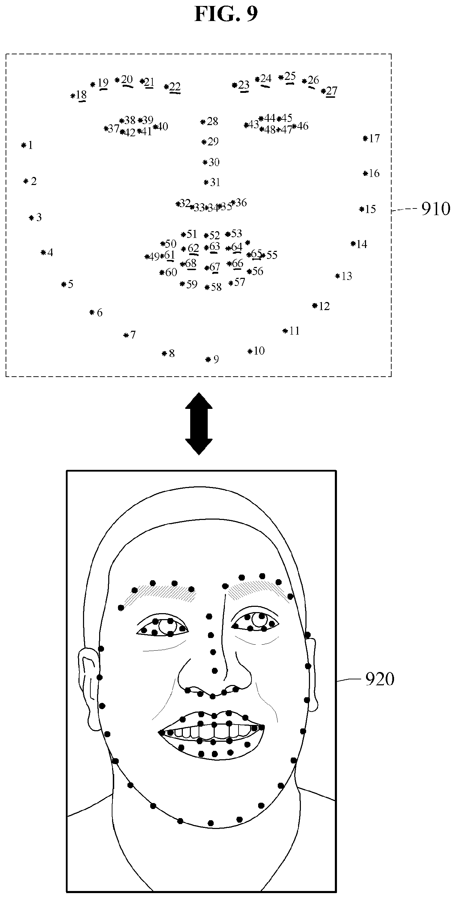

For example, FIG. 9 illustrates examples of keypoints used to identify a face. In the example of FIG. 9, a numbering 910 of identifying keypoints and a face image 920 in which a location of each of the identifying keypoints is indicated are illustrated. As illustrated, the identifying keypoints may include points on contours, such as, for example, eyes, a nose, a mouth, and a cheek. In an example, such identifying keypoints may be obtained in advance through a gaze-based localization algorithm based on a single image.

Referring back to FIG. 8, in operation 820, the user trigger intent determining apparatus obtains an identifying keypoint from the second image. The user trigger intent determining apparatus may obtain the identifying keypoint using a method similar to or different from the method used in operation 810.

In operation 830, the user trigger intent determining apparatus calculates a deviation value between the identifying keypoint of the first image and the identifying keypoint of the second image. In an example, the user trigger intent determining apparatus may use five deviation values such as a mean deviation (offset_LE) of a feature point of a left eye, a mean deviation (offset_RE) of a feature point of a right eye, a deviation value (offset_nose) of a feature point of a nose, a deviation value (offset_LM) of a feature point at a left end of a mouth, and a deviation value (offset_RM) of a feature point at a right end of the mouth.

For example, the mean deviation offset_LE of the feature point of the left eye may be a mean deviation of points numbered as 43 through 48 as illustrated in FIG. 9. As illustrated, a two-dimensional (2D) location of the points numbered as 43 through 48 may be indicated as (x_Img1(i), y_Img1(i)) in the first image, for example, Img1, and as (x_Img2(i), y_Img2(i)) in the second image, for example, Img2, in which i denotes an integer greater than or equal to 43 and less than or equal to 48. The mean deviation offset_LE of the feature point of the left eye may be calculated as represented by Equation 1.

[Equation 1]

$$\text{offset\_LE} = \frac{1}{6} * \sum_{i=43}^{48} \left( \begin{pmatrix} \text{x\_Img2(i)} \\ \text{y\_Img2(i)} \end{pmatrix} - \begin{pmatrix} \text{x\_Img1(i)} \\ \text{y\_Img1(i)} \end{pmatrix} \right)$$

The mean deviation offset_RE of the feature point of the right eye may be a mean deviation of points numbered as 37 through 42 as illustrated in FIG. 9. The mean deviation offset_RE of the feature point of the right eye may be calculated as represented by Equation 2.

[Equation 2]

$$\text{offset\_RE} = \frac{1}{6} * \sum_{i=37}^{42} \left( \begin{pmatrix} x\_Img2(i) \\ y\_Img2(i) \end{pmatrix} - \begin{pmatrix} x\_Img1(i) \\ y\_Img1(i) \end{pmatrix} \right)$$

The deviation value (offset_nose) of the feature point of the nose may be a deviation of a point numbered as 31 as illustrated in FIG. 9. The deviation value (offset_LM) of the feature point at the left end of the mouth may be a deviation of a point numbered as 55 as illustrated in FIG. 9, and the deviation value (offset_RM) of the feature point at the right end of the mouth may be a deviation of a point numbered as 49 as illustrated in FIG. 9.

In operation 840, the user trigger intent determining apparatus normalizes the calculated deviation value. For example, the user trigger intent determining apparatus may normalize the five deviation values obtained in operation 830. The user trigger intent determining apparatus may calculate a distance (dist_eye) between a point numbered as 37 and a point numbered as 46 of the first image, and divide each of the five deviation values by the distance dist_eye. The user trigger intent determining apparatus may then obtain a normalized mean deviation (norm_offset_LE) of the feature point of the left eye, a normalized mean deviation (norm_offset_RE) of the feature point of the right eye, a normalized deviation value (norm_offset_nose) of the feature point of the nose, a normalized deviation value (norm_offset_LM) of the feature point at the left end of the mouth, and a normalized deviation value (norm_offset_RM) of the feature point of the right end of the mouth.

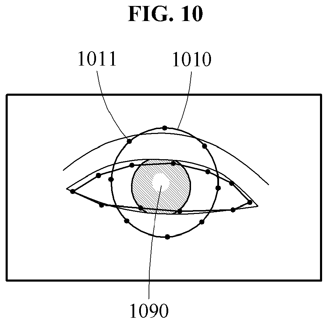

In operation 850, the user trigger intent determining apparatus detects a pupil center location of each of eyes from the first image. For example, the user trigger intent determining apparatus may perform this operation through various pupil location detection methods. FIG. 10 illustrates an example of a pupil location detection method. For example, an eyeball may be considered a circle, and thus the user trigger intent determining apparatus may fit a circle 1010 based on circumferential points 1011. The user trigger intent determining apparatus may determine a center of the circle 1010 to be a pupil center 1090. The user trigger intent determining apparatus may determine a center point of a left eye in the first image to be LC1, and a center point of a right eye in the first image to be RC1.

In operation 860, the user trigger intent determining apparatus detects respective pupil center locations of the eyes from the second image. Similar to operation 850, the user trigger intent determining apparatus may determine a center point of a left eye in the second image to be LC2, and a center point of a right eye in the second image to be RC2.

In operation 870, the user trigger intent determining apparatus obtains a normalized deviation value of a pupil center based on the first image and the second image. For example, the user trigger intent determining apparatus may calculate a deviation value between a pupil center in the first image and a pupil center in the second image. The user trigger intent determining apparatus may normalize the deviation value between the pupil centers using a canthus distance dist_eye, for example, a distance between both ends of eyes. The normalized deviation value between the pupil centers may be calculated as represented by Equation 3.

[Equation 3]

$$\text{norm\_offset\_LC} = (LC2 - LC1)/\text{dist\_eye}$$

$$\text{norm\_offset\_RC} = (RC2 - RC1)/\text{dist\_eye}$$

In Equation 3, norm_offset_LC indicates a normalized deviation value of the pupil center of the left eye, and norm_offset_RC indicates a normalized deviation value of the pupil center of the right eye.

In operation 880, the user trigger intent determining apparatus estimates a deviation in gaze location based on a gaze deviation estimation model. For example, the user trigger intent determining apparatus may estimate a deviation (dx, dy) in gaze location from the two images based on the normalized deviation values calculated in operations 840 and 870, using a trained gaze deviation estimation model. The gaze deviation estimation model may be, for example, a model trained based on an SVR.

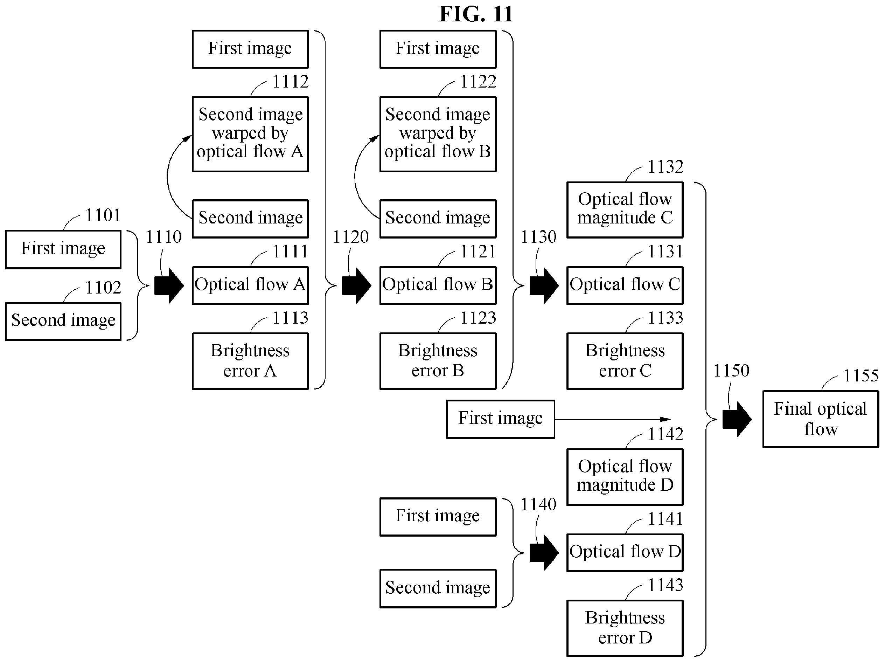

FIG. 11 is a diagram illustrating an example of a neural network configured to extract a feature associated with a deviation from two images.

In an example, a user trigger intent determining apparatus may obtain a gaze deviation model based on end-to-end training. For example, the user trigger intent determining apparatus may train the gaze deviation model by directly inputting two images to a single DNN and allowing an offset to regress.

The user trigger intent determining apparatus may preprocess the two images, and transmit the preprocessed images to the DNN. The user trigger intent determining apparatus may extract a feature associated with a deviation from the two images using the DNN. FIG. 11 illustrates an example of the DNN.

For example, as illustrated, a first optical network 1110 may be configured to calculate an optical flow A 1111 with a large displacement from a first image 1101 and a second image 1102. A second optical network 1120 may be configured to calculate an optical flow B 1121 with a large displacement based on the first image 1101, the second image 1102, the optical flow A 1111, a second image 1112 warped by the optical flow A 1111, and a brightness error A 1113. The brightness error A 1113 may be a difference between the first image 1101 and the second image 1112 warped by the optical flow A 1111.

A third optical network 1130 may be configured to calculate an optical flow C 1131 with a large displacement based on the first image 1101, the second image 1102, the optical flow B 1121, a second image 1122 warped by the optical flow B 1121, and a brightness error B 1123. The brightness error B 1123 may be a difference between the first image 1101 and the second image 1122 warped by the optical flow B 1121. A fourth optical network 1140 may be configured to calculate an optical flow D 1141 with a small displacement based on the first image 1101 and the second image 1102. A fusion network 1150 may be configured to calculate a final optical flow 1155 based on the optical flow C 1131, an optical flow magnitude C 1132, the brightness error C 1133, the optical flow D 1141, an optical flow magnitude D 1142, and a brightness error D 1143. The brightness error C 1133 may be a difference between the first image 1101 and a second image warped by the optical flow C 1131. The brightness error D 1143 may be a difference between the first image 1101 and a second image warped by the optical flow D 1141.

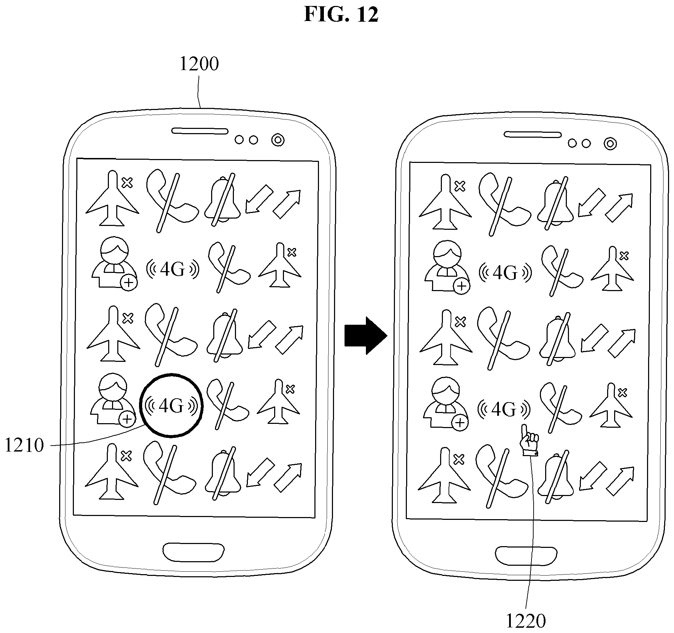

FIG. 12 is a diagram illustrating an example of executing an application.

A user may execute an application of a user trigger intent determining apparatus 1200, for example, a mobile phone, with a gaze. For example, the user may gaze at a target icon 1210 of an application appearing on a display of the user trigger intent determining apparatus 1200. The target icon 1210 may be an icon corresponding to the application the user desires to execute. Through operations 610, 620, and 630 described above with reference to FIG. 6, the user trigger intent determining apparatus 1200 calculates a first gaze location estimated from the gaze of the user.

As described above with reference to operation 640, the user trigger intent determining apparatus 1200 displays a visual stimuli object 1220, for example, a hand-shaped icon, at the first gaze location. As described above with reference to operation 650, the user may then gaze at the visual stimuli object 1220.

In operations 660 and 670, the user trigger intent determining apparatus 1200 may correct the first gaze location based on a second gaze location estimated while the user is gazing at the visual stimuli object 1220. For example, the user trigger intent determining apparatus 1200 may correct the first gaze location using a deviation value between the first gaze location and the second gaze location to determine a more accurate final gaze location, and then trigger an event corresponding to the final gaze location.

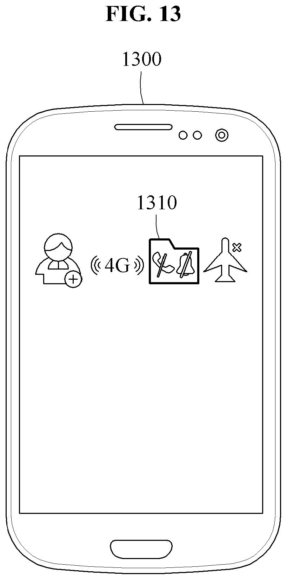

FIG. 13 is a diagram illustrating an example of a user trigger intent determining apparatus triggering an event associated with an application group.

In an example, a user trigger intent determining apparatus 1300 may execute an application in an application group 1310 based on a gaze location. The application group 1310 may be a group including a plurality of applications. The user trigger intent determining apparatus 1300 may display icons corresponding to the applications in the application group 1310, in an area of a same size as that of an area of a single icon.

As illustrated in FIG. 13, each icon in the application group 1310 may be displayed to be of a size smaller than that of a single icon. Thus, the user trigger intent determining apparatus 1300 may more accurately estimate a gaze location of the user and execute an application in the application group 1310.

For example, when an estimated gaze location matches an area occupied by the application group 1310 on a display, the user trigger intent determining apparatus 1300 may trigger an event corresponding to the application group 1310. The user trigger intent determining apparatus 1300 may enlarge a graphical representation corresponding to the application group 1310 including the applications, based on the estimated gaze location, and display the enlarged graphical representation. The user trigger intent determining apparatus 1300 may determine an event to be triggered based on a gaze location estimated again with respect to the enlarged graphical representation. For example, when a graphical representation corresponding to each of the applications in the application group 1310 is enlarged, the user trigger intent determining apparatus 1300 may estimate a final gaze location and determine an application corresponding to the final gaze location. The user trigger intent determining apparatus 1300 may trigger an event of the application corresponding to the final gaze location, for example, execution of the application.

In another example, the user trigger intent determining apparatus 1300 may accurately estimate a final gaze location, and determine an application corresponding to the final gaze location in the area occupied by the application group 1310. Thus, the user trigger intent determining apparatus 1300 may execute the application among the applications in the application group 1310 based on a gaze at the application, without enlarging the application group 1310.

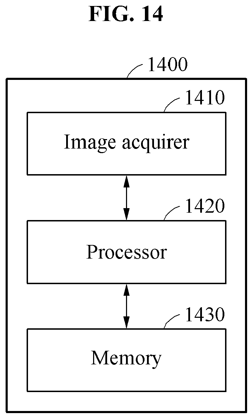

FIG. 14 is a diagram illustrating an example of a user trigger intent determining apparatus.

Referring to FIG. 14, a user trigger intent determining apparatus 1400 includes an image acquirer 1410, a processor 1420, and a memory 1430.

The image acquirer 1410 may obtain an image from a user. The image acquirer 1410 obtains at least one first face image from the user, and at least one second face image after a visual stimuli object is displayed. For example, the image acquirer 1410 may obtain a face image by capturing an image of a face of the user. In an example, the image acquirer 1410 obtains the at least one first face image and the at least one second face image in sequential order. For example, the image acquirer 1410 may include an image sensor, such as, for example, an RGB camera sensor, a depth sensor, an infrared sensor, and a near infrared sensor. However, examples of the image acquirer 1410 are not limited to the example described in the foregoing, and the image acquirer 1410 may receive an image from an external device by wire or wirelessly.

The processor 1420 may determine a first gaze location of the user based on the at least one first face image, display the visual stimuli object at the determined first gaze location, and determine an event corresponding to a trigger intent of the user and an estimated gaze location based on the at least one second face image. Further details regarding the processor 1420 is provided below.

The memory 1430 may temporarily or permanently store data needed to perform a user trigger intent determining method described herein. The memory 1430 may store a gaze estimation model and a gaze deviation estimation model described herein. Further details regarding the memory 1430 is provided below.

In an example, the user trigger intent determining apparatus 1400 may be applied to virtual reality (VR), augmented reality (AR), and a smart driving assistant. In an example, these example applications may interact using only a gaze without other operations, for example, hand manipulation.

In an environment such as VR or AR, a display device, for example, a head-up display (HUD) and eyeglasses, may be disposed at a location extremely close to an eye of a user. Thus, dissimilar to a mobile phone, the display device configured to provide a VR or AR effect may not readily use an interaction using a touchscreen or a hand gesture. Thus, in the environment of VR or AR, an application may be readily executed using a gaze. In the environment of VR or AR, the image sensor may be disposed closer to an eye of a user, and may thus obtain data including a greater amount of details. In addition, in a case in which the image sensor is disposed close to an eye, the image sensor may prevent an interference caused by a head pose. In a case in which the image sensor is integrated with a HUD or eyeglasses, the image sensor may move along with a head, and thus there may be no change in pose of the eye. Thus, the user trigger intent determining apparatus 1400 may determine an accurate gaze location of the user.

In an environment of smart driving assistance, a user may generally grab a steering wheel of a vehicle with a hand of the user. In such an environment, the user trigger intent determining apparatus 1400 may visualize an interaction interface through a HUD provided in the vehicle, and thus provide the user with a more natural interface enabling a gaze-based interaction.

Although a single triggering operation has been described above, examples are not limited thereto. For example, a plurality of triggering operations may be embodied. For example, the user trigger intent determining apparatus 1400 may trigger a plurality of triggering operations individually or sequentially for an interface such as a menu and a submenu, or an environment menu. For example, when the user trigger intent determining apparatus 1400 pops up a single environment menu through first gaze-based localization, there may be a plurality of icons corresponding to a plurality of events on the environment menu. The user trigger intent determining apparatus 1400 may identify a gaze location for an icon on the popped up environment menu through second gaze-based localization, and trigger an event corresponding to the icon.

In an example, the user trigger intent determining apparatus 1400 may correct a gaze location using a visual stimuli object, thereby increasing an accuracy in localization by approximately 50%. In addition, the user trigger intent determining apparatus 1400 may correct an accuracy with respect to two directions, for example, a vertical direction and a horizontal direction.

Further, the user trigger intent determining apparatus 1400 may also perform localization in a three-dimensional (3D) space, in addition to localization in a 2D space. For example, in an AR environment, the user trigger intent determining apparatus 1400 may estimate a gaze location in a 3D space. In this example, the user trigger intent determining apparatus 1400 may estimate 3D coordinates $(x0, y0, z0)$ as a first gaze location in the 3D space, display a visual stimuli object at the first gaze location, estimates 3D coordinates $(x', y', z')$ as a gaze location of a user in response to the visual stimuli object, and calculates a 3D deviation $(dx, dy, dz) = (x'-x0, y'-y0, z'-z0)$. The user trigger intent determining apparatus 1400 may correct the first gaze location using the 3D deviation, and calculate a second gaze location, for example, $(x0-dx, y0-dy, z0-dz)$.

In an example, the user trigger intent determining apparatus 1400 may determine a location estimated through localization from a second image obtained in operation 670 to be ground-truth information corresponding to the second image. The user trigger intent determining apparatus 1400 may generate training data including a pair of a final location estimated through localization and the ground-truth information. The user trigger intent determining apparatus 1400 may train a gaze deviation estimation model for an individual user based on such training data. Thus, the user trigger intent determining apparatus 1400 may obtain a gaze deviation estimation model personalized for an individual user.

In an example, the user trigger intent determining apparatus 1400 may improve a quality of user experience because a duration for which a user needs to keep a gaze is relatively short and thus the user does not need to gaze at one location for a long period of time. In addition, the user trigger intent determining apparatus 1400 may use a visual stimuli object to help the user recover from a state in which the user loses concentration, and thus resolve an issue of Midas touch.

In other examples, the user trigger intent determining apparatus 1400 may be applied to various devices such as, for example, a mobile phone, a cellular phone, a smartphone, a portable personal computer (PC), a laptop, a notebook, a subnotebook, a netbook, or an ultra-mobile PC (UMPC), a phablet, a tablet PC, a smart pad, a personal digital assistant (PDA), a laptop computer, a desktop computer, a digital camera, a portable game console, an MP3 player, a portable/personal multimedia player (PMP), a handheld e-book, a handheld game console, an e-book, a set-top box, a speech recognition speaker, a TV, a wearable device, a smart television (TV), a DVD player, a Blue-ray player, a setup box, a personal navigation device or portable navigation device (PND), a global positioning system (GPS) navigation device, robot cleaners, a security system, a smart home device, a smart appliance, a smart building system, a smart home system, a smart office system, or a smart electronic security system, or various Internet of Things (IoT) devices that are controlled through a network. Also, the speech recognition apparatus may be included in or configured to interact with a wearable device, which is any device that is mounted on the body of the user, such as, for example, a watch, a pair of glasses, glasses-type device, a bracelet, a helmet, or a device embedded in clothing, or an eye glass display (EGD).

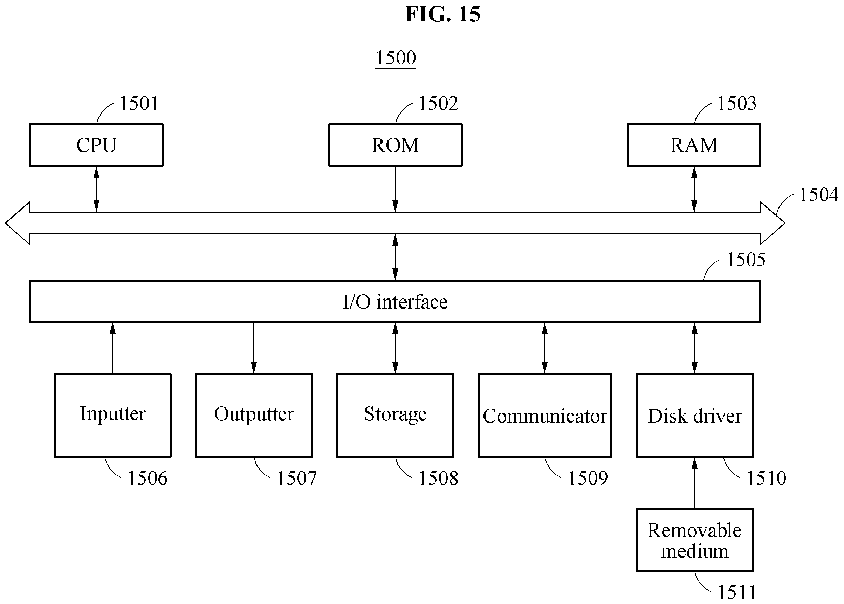

FIG. 15 is a diagram illustrating an example of a user trigger intent determining apparatus.

Referring to FIG. 15, a user trigger intent determining apparatus 1500 includes a central processing unit (CPU) 1501. The CPU 1501 may process or execute various operations based on a program stored in a read-only memory (ROM) 1502 or a program loaded into a random-access memory (RAM) 1503 from a storage 1508. The RAM 1503 may store various programs and sets of data needed for operations of the user trigger intent determining apparatus 1500. The CPU 1501, the ROM 1502, and the RAM 1503 may be connected to one another through a broadcast and unknown server (BUS) 1504, and an input and output (I/O) interface 1505 may also be connected thereto through the BUS 1504.

The user trigger intent determining apparatus 1500 further includes an inputter 1506, an outputter 1507, the storage 1508, a communicator 1509, and a disk driver 1510. The inputter 1506 may include, for example, a display, a keyboard and a mouse. The outputter 1507 may include, for example, a cathode-ray tube (CRT), a liquid crystal display (LCD), a speaker, and the like. The storage 1508 may include, for example, a hard disk. Further details regarding the storage 1508 is provided below. The communicator 1509 may include a network interface, for example, a local area network (LAN) card and a modem. The communicator 1509 may perform communication processing through a network, such as, for example, the Internet. The disk driver 1510 may be connected to the I/O interface 1505.

A removable medium 1511, such as, for example, a disk, a compact disc (CD), a magneto-optical disc, and a semiconductor memory, may be installed in the disk driver 1510. A computer-readable program read from the removable medium 1511 may be installed in the storage 1508.

The user trigger intent determining apparatus, user trigger intent determining apparatus 100, user trigger intent determining apparatus 400, first image acquirer 410, receiver, retriever, location determiner 420, visual stimuli object adder 430, second image acquirer 440, trigger intent determiner 450, location corrector 460, event trigger module 470, user trigger intent determining apparatus 1400, image acquirer 1410, and other apparatuses, units, modules, devices, and other components described herein with respect to FIGS. 4, 14, and 15 are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 2, 3, 5, 6, 7, 8, and 11 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In an example, the instructions or software includes at least one of an applet, a dynamic link library (DLL), middleware, firmware, a device driver, an application program storing the method of preventing the collision. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory, such as, a multimedia card, a secure digital (SD) or a extreme digital (XD), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. Examples of a non-transitory computer-readable storage medium include read-only memory (ROM), random-access memory (RAM), CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

**Claims**

1. A user trigger intent determining method, comprising:

   in response to determining (520; 620) that a user who is localizing an interactive target (1210) displayed on a display is gazing at the display for at least a first duration without eye movement, determining (520; 630) a first gaze location of the user based on at least one first face image obtained during the first duration;
   displaying (530; 640) a visual stimuli object (1220) at the first gaze location, appearing offset from an intended initial gaze location at which the user actually gazes to localize the target (1210) when the at least one first face image is obtained;
in response to determining (540; 650) that the user gazes at the visual stimuli object (1220) for at least a second duration without eye movement, obtaining (660) at least one second face image of the user;
calculating (720) a deviation in gaze location from the at least one first face image and the at least one second face image, the deviation in gaze location indicating a difference between a location at which the user is actually gazing and an estimated gaze location;
correcting (670; 730) the first gaze location based on the deviation in gaze location to obtain an estimated final gaze location of the user corresponding to the intended initial gaze location; and
by using the determining that the user gazes at the visual stimuli object (1220) for at least the second duration without eye movement as a trigger operation performed by the user with the intent to trigger an event corresponding to the localized target (1210) at the intended initial gaze location, determining the event based on the estimated final gaze location of the user and triggering the determined event.

2. The user trigger intent determining method of claim 1, wherein the calculating of the deviation in gaze location comprises:

determining a second gaze location of the user based on the at least one second face image; and
determining a deviation between the first gaze location and the second gaze location as the deviation in gaze location from the at least one first face image and the at least one second face image.

3. The user trigger intent determining method of claim 1, wherein the calculating of the deviation in gaze location comprises:
calculating the deviation in gaze location based on identifying keypoints of the at least one first face image and the at least one second face image.

4. The user trigger intent determining method of claim 3, wherein the calculating of the deviation in gaze location based on the identifying keypoints comprises:

selecting at least one identifying keypoint from the at least one first face image;
selecting at least one corresponding identifying keypoint from the at least one second face image, wherein a number of the at least one identifying keypoint is equal to a number of the at least one corresponding identifying keypoint;
calculating a corresponding deviation value between the at least one identifying keypoint and the at least one corresponding identifying keypoint; and
estimating the deviation in gaze location from the at least one first face image and the at least one second face image based on the corresponding deviation value.

5. The user trigger intent determining method of claim 4, wherein the estimating of the deviation in gaze location based on the corresponding deviation value comprises estimating the deviation in gaze location from the at least one first face image and the at least one second face image based on a gaze deviation estimation model.

6. The user trigger intent determining method of claim 4 or 5, wherein

the method further comprises training a gaze deviation estimation model based on the corresponding deviation value; or
the method further comprises normalizing the corresponding deviation value, and training a gaze deviation estimation model using the normalized corresponding deviation value.

7. The user trigger intent determining method of any of claims 1-6, wherein the calculating of the deviation in gaze location comprises:
extracting the deviation in gaze location from the at least one first face image and the at least one second face image using a deep neural network (DNN).

8. The user trigger intent determining method of any of the previous claims, wherein the determining that the user is gazing at the display for at least the first duration without eye movement comprises:
determining whether an eye movement of the user is stopped based on a comparison of at least two first face images of the user comprising the at least one first face image.

**9.** The user trigger intent determining method of claim 8,
wherein the determining of whether the eye movement of the user is stopped comprises:

determining that the eye movement of the user is stopped, in response to a gaze of the user lingering for the first duration; and/or
wherein the determining of the first gaze location comprises:
calculating the first gaze location of the user based on a first face image of the at least one first face image corresponding to the first duration, in response to the gaze of the user lingering for the first duration.

**10.** The user trigger intent determining method of claim 8 or 9, wherein the calculating of the deviation in gaze location comprises: calculating a second gaze location of the user from the at least one second face image.

**11.** The user trigger intent determining method of claim 10,
wherein the determining that the user gazes at the visual stimuli object for at least the second duration without eye movement comprises:

determining that a gaze of the user is lingering for the second duration; and/or
wherein the calculating of the second gaze location comprises:
calculating the second gaze location based on a second face image of the at least one second face image corresponding to the second duration, in response to the gaze of the user lingering for the second duration.

**12.** The user trigger intent determining method of any of the previous claims, wherein the determining of the event comprises:

enlarging a graphical representation corresponding to an application group including applications based on the estimated final gaze location, and displaying the enlarged graphical representation; and
determining the event to be triggered based on a gaze location re-estimated from the enlarged graphical representation.

**13.** A non-transitory computer-readable storage medium storing instructions that, when executed by a processor, cause the processor to perform the user trigger intent determining method of any of the previous claims.

**14.** A user trigger intent determining apparatus (1400), comprising:

an image acquirer (1410) configured to obtain face images of a user; and
a processor (1420) configured to:

determine (520; 620) that the user who is localizing an interactive target (1210) displayed on a display is gazing at the display for at least a first duration without eye movement and, in response thereto, determine (520; 630) a first gaze location of the user based on at least one first face image obtained by the image acquirer (1410) during the first duration;
display (530; 640) a visual stimuli object (1220) at the first gaze location, appearing offset from an intended initial gaze location at which the user actually gazes to localize the target (1210) when the at least one first face image is obtained;
determine (540; 650) that the user gazes at the visual stimuli object (1220) for at least a second duration without eye movement;
calculate (720) a deviation in gaze location from the at least one first face image and at least one second face image that is obtained by the image acquirer (1410) in response to the determination that the user gazes at the visual stimuli object (1220) for at least the second duration without eye movement, the deviation in gaze location indicating a difference between a location at which the user is actually gazing and an estimated gaze location;
correct (670; 730) the first gaze location based on the deviation in gaze location to obtain an estimated final gaze location of the user corresponding to the intended initial gaze location; and
by using the determination that the user gazes at the visual stimuli object (1220) for at least the second duration without eye movement as a trigger operation performed by the user with the intent to trigger an event corresponding to the localized target (1210) at the intended initial gaze location, determine the event based on the estimated final gaze location of the user and trigger the determined event.

**Patentansprüche**

1. Verfahren zum Bestimmen einer Auslöseabsicht eines Benutzers, wobei das Verfahren Folgendes umfasst:

   als Reaktion auf das Bestimmen (520; 620), dass ein Benutzer, der ein auf einer Anzeige angezeigtes interaktives Ziel (1210) lokalisiert, ohne Augenbewegung für mindestens eine erste Dauer auf die Anzeige schaut, Bestimmen (520; 630) einer ersten Blickposition des Benutzers basierend auf mindestens einem ersten Gesichtsbild, das während der ersten Dauer erhalten wurde;
   Anzeigen (530; 640) eines visuellen Reizobjekts (1220) an der ersten Blickposition, das versetzt von einer beabsichtigten anfänglichen Blickposition erscheint, auf die der Benutzer tatsächlich schaut, um das Ziel (1210) zu lokalisieren, wenn das mindestens eine erste Gesichtsbild erhalten wird;
   als Reaktion auf das Bestimmen (540; 650), dass der Benutzer ohne Augenbewegung für mindestens eine zweite Dauer auf das visuelle Reizobjekt (1220) schaut, Erhalten (660) mindestens eines zweiten Gesichtsbildes des Benutzers;
   Berechnen (720) einer Abweichung der Blickposition von dem mindestens einen ersten Gesichtsbild und dem mindestens einen zweiten Gesichtsbild, wobei die Abweichung der Blickposition einen Unterschied zwischen einer Position, auf die der Benutzer tatsächlich schaut, und einer geschätzten Blickposition anzeigt;
   Korrigieren (670; 730) der ersten Blickposition basierend auf der Abweichung der Blickposition, um eine geschätzte endgültige Blickposition des Benutzers zu erhalten, die der beabsichtigten anfänglichen Blickposition entspricht; und
   durch Verwenden der Bestimmung, dass der Benutzer ohne Augenbewegung für mindestens die zweite Dauer auf das visuelle Reizobjekt (1220) schaut, was als eine von dem Benutzer durchgeführte Auslöseoperation mit der Absicht dient, ein dem lokalisierten Ziel (1210) entsprechendes Ereignis an der beabsichtigten anfänglichen Blickposition auszulösen, Bestimmen des Ereignisses basierend auf der geschätzten endgültigen Blickposition des Benutzers und Auslösen des bestimmten Ereignisses.

2. Verfahren zum Bestimmen der Auslöseabsicht eines Benutzers nach Anspruch 1, wobei das Berechnen der Abweichung der Blickposition Folgendes umfasst:

   Bestimmen einer zweiten Blickposition des Benutzers basierend auf dem mindestens einen zweiten Gesichtsbild; und
   Bestimmen einer Abweichung zwischen der ersten Blickposition und der zweiten Blickposition als Abweichung der Blickposition von dem mindestens einen ersten Gesichtsbild und dem mindestens einen zweiten Gesichtsbild.

3. Verfahren zum Bestimmen der Auslöseabsicht eines Benutzers nach Anspruch 1, wobei das Berechnen der Abweichung der Blickposition Folgendes umfasst:
   Berechnen der Abweichung der Blickposition basierend auf identifizierenden Schlüsselpunkten des mindestens einen ersten Gesichtsbildes und des mindestens einen zweiten Gesichtsbildes.

4. Verfahren zum Bestimmen der Auslöseabsicht eines Benutzers nach Anspruch 3, wobei das Berechnen der Abweichung der Blickposition basierend auf den identifizierenden Schlüsselpunkten Folgendes umfasst:

   Auswählen mindestens eines identifizierenden Schlüsselpunkts aus dem mindestens einen ersten Gesichtsbild;
   Auswählen mindestens eines entsprechenden identifizierenden Schlüsselpunktes aus dem mindestens einen zweiten Gesichtsbild, wobei eine Anzahl des mindestens einen identifizierenden Schlüsselpunktes gleich einer Zahl des mindestens einen entsprechenden identifizierenden Schlüsselpunkts ist;
   Berechnen eines entsprechenden Abweichungswerts zwischen dem mindestens einen identifizierenden Schlüsselpunkt und dem mindestens einen entsprechenden identifizierenden Schlüsselpunkt; und
   Schätzen der Abweichung der Blickposition von dem mindestens einen ersten Gesichtsbild und dem mindestens einen zweiten Gesichtsbild basierend auf dem entsprechenden Abweichungswert.

5. Verfahren zum Bestimmen der Auslöseabsicht eines Benutzers nach Anspruch 4, wobei das Schätzen der Abweichung der Blickposition basierend auf dem entsprechenden Abweichungswert Folgendes umfasst: Schätzen der Abweichung der Blickposition von dem mindestens einen ersten Gesichtsbild und dem mindestens einen zweiten Gesichtsbild basierend auf einem Blickabweichungs-Schätzmodell.

6. Verfahren zum Bestimmen der Auslöseabsicht eines Benutzers nach Anspruch 4 oder 5, wobei das Verfahren ferner

**EP 3 511 803 B1**

Folgendes umfasst: Trainieren eines Blickabweichungs-Schätzmodells basierend auf dem entsprechenden Abweichungswert; oder

das Verfahren ferner Folgendes umfasst: Normalisieren des entsprechenden Abweichungswerts und Trainieren eines Blickabweichungs-Schätzmodells unter Verwendung des normalisierten entsprechenden Abweichungswerts.

7. Verfahren zum Bestimmen der Auslöseabsicht eines Benutzers nach einem der Ansprüche 1 bis 6, wobei das Berechnen der Abweichung der Blickposition Folgendes umfasst:
Extrahieren der Abweichung der Blickposition von dem mindestens einen ersten Gesichtsbild und dem mindestens einen zweiten Gesichtsbild unter Verwendung eines tiefen neuronalen Netzes (DNN, Deep Neural Network).

8. Verfahren zum Bestimmen der Auslöseabsicht eines Benutzers nach einem der vorhergehenden Ansprüche, wobei das Bestimmen, dass der Benutzer zumindest für die erste Dauer ohne Augenbewegung auf die Anzeige schaut, Folgendes umfasst:
Bestimmen, ob eine Augenbewegung des Benutzers gestoppt wird, basierend auf einem Vergleich von mindestens zwei ersten Gesichtsbildern des Benutzers, die das mindestens eine erste Gesichtsbild umfassen.

9. Verfahren zum Bestimmen der Auslöseabsicht eines Benutzers nach Anspruch 8,

wobei das Bestimmen, ob die Augenbewegung des Benutzers gestoppt wird, Folgendes umfasst:
Bestimmen, dass eine Augenbewegung des Benutzers gestoppt wird, als Reaktion auf einen Blick des Benutzers, der für die erste Dauer verweilt; und/oder
wobei das Bestimmen der ersten Blickposition Folgendes umfasst:
Berechnen der ersten Blickposition des Benutzers basierend auf einem ersten Gesichtsbild aus dem mindestens einen ersten Gesichtsbild, das der ersten Dauer entspricht, als Reaktion darauf, dass der Blick des Benutzers für die erste Dauer verweilt.

10. Verfahren zum Bestimmen der Auslöseabsicht eines Benutzers nach Anspruch 8 oder 9, wobei das Berechnen der Abweichung der Blickposition Folgendes umfasst:
Berechnen einer zweiten Blickposition des Benutzers aus dem mindestens einen zweiten Gesichtsbild.

11. Verfahren zum Bestimmen der Auslöseabsicht eines Benutzers nach Anspruch 10, wobei das Bestimmen, dass der Benutzer zumindest für die zweite Dauer ohne Augenbewegung auf das Reizobjekt schaut, Folgendes umfasst:
Bestimmen, dass ein Blick des Benutzers für die zweite Dauer verweilt; und/oder wobei das Berechnen der zweiten Blickposition Folgendes umfasst:
Berechnen der zweiten Blickposition basierend auf einem zweiten Gesichtsbild aus dem mindestens einen zweiten Gesichtsbild, das der zweiten Dauer entspricht, als Reaktion darauf, dass der Blick des Benutzers für die zweite Dauer verweilt.

12. Verfahren zum Bestimmen der Auslöseabsicht eines Benutzers nach einem der vorhergehenden Ansprüche, wobei das Bestimmen des Ereignisses Folgendes umfasst:

Vergrößern einer grafischen Darstellung, die einer Anwendungsgruppe entspricht, welche Anwendungen enthält, basierend auf der geschätzten endgültigen Blickposition, und Anzeigen der vergrößerten grafischen Darstellung; und
Bestimmen des auszulösenden Ereignisses basierend auf einer aus der vergrößerten grafischen Darstellung neu geschätzten Blickposition.

13. Nicht flüchtiges, computerlesbares Speichermedium, auf dem Anweisungen gespeichert sind, die, wenn sie von einem Prozessor ausgeführt werden, bewirken, dass der Prozessor das Verfahren zum Bestimmen der Auslöseabsicht eines Benutzers nach einem der vorhergehenden Ansprüche durchführt.

14. Vorrichtung (1400) zum Bestimmen der Auslöseabsicht eines Benutzers, wobei die Vorrichtung Folgendes umfasst:

eine Bilderfassungseinrichtung (1410), die konfiguriert ist, um Gesichtsbilder eines Benutzers zu erhalten; und
einen Prozessor (1420), der zu Folgendem konfiguriert ist:

Bestimmen (520; 620), dass der Benutzer, der ein auf einer Anzeige angezeigtes interaktives Ziel (1210) lokalisiert, ohne Augenbewegung für mindestens eine erste Dauer auf die Anzeige schaut, und als Reaktion darauf, Bestimmen (520; 630) einer ersten Blickposition des Benutzers basierend auf mindestens einem ersten Gesichtsbild, das während der ersten Dauer von der Bilderfassungseinrichtung (1410) erhalten wurde;

Anzeigen (530; 640) eines visuellen Reizobjekts (1220) an der ersten Blickposition, das versetzt von einer beabsichtigten anfänglichen Blickposition erscheint, auf die der Benutzer tatsächlich schaut, um das Ziel (1210) zu lokalisieren, wenn das mindestens eine erste Gesichtsbild erhalten wird;

Bestimmen (540; 650), dass der Benutzer ohne Augenbewegung für mindestens eine zweite Dauer auf das visuelle Reizobjekt (1220) schaut;

Berechnen (720) einer Abweichung der Blickposition von dem mindestens einen ersten Gesichtsbild und mindestens einem zweiten Gesichtsbild, das von der Bilderfassungseinrichtung (1410) erhalten wird als Reaktion auf die Bestimmung, dass der Benutzer für mindestens die zweite Dauer ohne Augenbewegungen auf das visuelle Reizobjekt (1220) schaut, wobei die Abweichung der Blickposition einen Unterschied zwischen einer Position, auf die der Benutzer tatsächlich schaut, und einer geschätzten Blickposition anzeigt;

Korrigieren (670; 730) der ersten Blickposition basierend auf der Abweichung der Blickposition, um eine geschätzte endgültige Blickposition des Benutzers zu erhalten, die der beabsichtigten anfänglichen Blickposition entspricht; und

durch Verwenden der Bestimmung, dass der Benutzer ohne Augenbewegung für mindestens die zweite Dauer auf das visuelle Reizobjekt (1220) schaut, was als eine von dem Benutzer durchgeführte Auslöseoperation mit der Absicht dient, ein dem lokalisierten Ziel (1210) entsprechendes Ereignis an der beabsichtigten anfänglichen Blickposition auszulösen, Bestimmen des Ereignisses basierend auf der geschätzten endgültigen Blickposition des Benutzers und Auslösen des bestimmten Ereignisses.

## Revendications

1. Procédé de détermination d'une intention de déclenchement de la part d'un utilisateur, comprenant :

   en réaction à la détermination (520 ; 620) du fait qu'un utilisateur qui est en train de localiser une cible interactive (1210) affichée sur un écran regarde l'écran pendant au moins une première durée sans mouvement oculaire, la détermination (520 ; 630) d'un premier emplacement du regard de l'utilisateur compte tenu d'au moins une première image du visage obtenue pendant la première durée ;

   l'affichage (530 ; 640) d'un objet de stimulus visuel (1220) au premier emplacement du regard, apparaissant décalé par rapport à un emplacement initial prévu du regard que l'utilisateur regarde effectivement afin de localiser la cible (1210) lorsque l'au moins une première image du visage est obtenue ;

   en réaction à la détermination (540 ; 650) du fait que l'utilisateur regarde l'objet de stimulus visuel (1220) pendant au moins une deuxième durée sans mouvement oculaire, l'obtention (660) d'au moins une deuxième image du visage de l'utilisateur ;

   le calcul (720) d'un écart concernant l'emplacement du regard à partir de l'au moins une première image du visage et de l'au moins une deuxième image du visage, l'écart concernant l'emplacement du regard indiquant une différence entre un emplacement que l'utilisateur est effectivement en train de regarder et un emplacement estimé du regard ;

   la correction (670 ; 730) du premier emplacement du regard compte tenu de l'écart concernant l'emplacement du regard afin d'obtenir un emplacement final estimé du regard de l'utilisateur correspondant à l'emplacement initial prévu du regard ; et

   au moyen de la détermination du fait que l'utilisateur regarde l'objet de stimulus visuel (1220) pendant au moins la deuxième durée sans mouvement oculaire, ce qui sert d'opération de déclenchement réalisée par l'utilisateur dans l'intention de déclencher un événement correspondant à la cible localisée (1210) à l'emplacement initial prévu du regard, la détermination de l'événement compte tenu de l'emplacement final estimé du regard de l'utilisateur et le déclenchement de l'événement déterminé.

2. Procédé de détermination d'une intention de déclenchement de la part d'un utilisateur selon la revendication 1, dans lequel le calcul de l'écart concernant l'emplacement du regard comprend :

   la détermination d'un deuxième emplacement du regard de l'utilisateur compte tenu de l'au moins une deuxième image du visage, et

   la détermination d'un écart entre le premier emplacement du regard et le deuxième emplacement du regard en tant qu'écart concernant l'emplacement du regard à partir de l'au moins une première image du visage et de l'au moins une deuxième image du visage.

**3.** Procédé de détermination d'une intention de déclenchement de la part d'un utilisateur selon la revendication 1, dans lequel le calcul de l'écart concernant l'emplacement du regard comprend :
le calcul de l'écart concernant l'emplacement du regard compte tenu de points-clés d'identification de l'au moins une première image du visage et de l'au moins une deuxième image du visage.

**4.** Procédé de détermination d'une intention de déclenchement de la part d'un utilisateur selon la revendication 3, dans lequel le calcul de l'écart concernant l'emplacement du regard compte tenu des points-clés d'identification comprend :

la sélection d'au moins un point-clé d'identification à partir de l'au moins une première image du visage ;
la sélection d'au moins un point-clé d'identification correspondant à partir de l'au moins une deuxième image du visage, le nombre de l'au moins un point-clé d'identification étant égal au nombre de l'au moins un point-clé d'identification correspondant ;
le calcul d'une valeur d'écart correspondante entre l'au moins un point-clé d'identification et l'au moins un point-clé d'identification correspondant ; et
l'estimation de l'écart concernant l'emplacement du regard à partir de l'au moins une première image du visage et de l'au moins une deuxième image du visage compte tenu de la valeur d'écart correspondante.

**5.** Procédé de détermination d'une intention de déclenchement de la part d'un utilisateur selon la revendication 4, dans lequel l'estimation de l'écart concernant l'emplacement du regard compte tenu de la valeur d'écart correspondante comprend l'estimation de l'écart concernant l'emplacement du regard à partir de l'au moins une première image du visage et de l'au moins une deuxième image du visage compte tenu d'un modèle d'estimation d'écart relatif au regard.

**6.** Procédé de détermination d'une intention de déclenchement de la part d'un utilisateur selon la revendication 4 ou 5, ledit procédé comprenant en outre l'entraînement d'un modèle d'estimation d'écart relatif au regard compte tenu de la valeur d'écart correspondante ; ou
ledit procédé comprenant en outre la normalisation de la valeur d'écart correspondante, et l'entraînement d'un modèle d'estimation d'écart relatif au regard au moyen de la valeur d'écart normalisée correspondante.

**7.** Procédé de détermination d'une intention de déclenchement de la part d'un utilisateur selon l'une quelconque des revendications 1 à 6, dans lequel le calcul de l'écart concernant l'emplacement du regard comprend :
l'extraction de l'écart concernant l'emplacement du regard à partir de l'au moins une première image du visage et de l'au moins une deuxième image du visage au moyen d'un réseau neuronal profond (RNP).

**8.** Procédé de détermination d'une intention de déclenchement de la part d'un utilisateur selon l'une quelconque des revendications précédentes, dans lequel la détermination du fait que l'utilisateur regarde l'écran pendant au moins la première durée sans mouvement oculaire comprend :
la détermination du fait qu'un mouvement oculaire de l'utilisateur est arrêté ou non, compte tenu d'une comparaison d'au moins deux premières images du visage de l'utilisateur, dont l'au moins une première image du visage.

**9.** Procédé de détermination d'une intention de déclenchement de la part d'un utilisateur selon la revendication 8,

dans lequel la détermination du fait que le mouvement oculaire de l'utilisateur est arrêté ou non comprend :
la détermination du fait qu'un mouvement oculaire de l'utilisateur est arrêté, en réaction au fait que le regard de l'utilisateur subsiste pendant la première durée ; et/ou
dans lequel la détermination du premier emplacement du regard comprend :
le calcul du premier emplacement du regard de l'utilisateur compte tenu d'une première image du visage, parmi l'au moins une première image du visage, correspondant à la première durée, en réaction au fait que le regard de l'utilisateur subsiste pendant la première durée.

**10.** Procédé de détermination d'une intention de déclenchement de la part d'un utilisateur selon la revendication 8 ou 9, dans lequel le calcul de l'écart concernant l'emplacement du regard comprend :
le calcul d'un deuxième emplacement du regard de l'utilisateur à partir de l'au moins une deuxième image du visage.

**11.** Procédé de détermination d'une intention de déclenchement de la part d'un utilisateur selon la revendication 10, dans lequel la détermination du fait que l'utilisateur regarde l'objet de stimulus visuel pendant au moins la deuxième durée sans mouvement oculaire comprend :
la détermination du fait que le regard de l'utilisateur subsiste pendant la deuxième durée ; et/ou dans lequel le calcul du deuxième emplacement du regard comprend :

le calcul du deuxième emplacement du regard compte tenu d'une deuxième image du visage de l'au moins une deuxième image du visage correspondant à la deuxième durée, en réaction au fait que le regard de l'utilisateur subsiste pendant la deuxième durée.

12. Procédé de détermination d'une intention de déclenchement de la part d'un utilisateur selon l'une quelconque des revendications précédentes, dans lequel la détermination de l'événement comprend :

l'agrandissement d'une représentation graphique correspondant à un groupe d'applications comprenant des applications compte tenu de l'emplacement final estimé du regard, et l'affichage de la représentation graphique agrandie, et
la détermination de l'événement à déclencher compte tenu d'un emplacement du regard ré-estimé à partir de la représentation graphique agrandie.

13. Support d'enregistrement non transitoire lisible par ordinateur, sur lequel sont enregistrées des instructions qui, lorsqu'elles sont exécutées par un processeur, amènent le processeur à réaliser le procédé de détermination d'une intention de déclenchement de la part d'un utilisateur selon l'une quelconque des revendications précédentes.

14. Dispositif de détermination d'une intension de déclenchement de la part d'un utilisateur (1400), comprenant :

un dispositif d'acquisition d'images (1410) conçu pour obtenir des images du visage d'un utilisateur, et
un processeur (1420) conçu pour :

déterminer (520 ; 620) qu'un utilisateur qui est en train de localiser une cible interactive (1210) affichée sur un écran regarde l'écran pendant au moins une première durée sans mouvement oculaire et, en réaction à cela, déterminer (520 ; 630) un premier emplacement du regard de l'utilisateur compte tenu d'au moins une première image du visage obtenue par le dispositif d'acquisition d'images (1410) pendant la première durée ;
afficher (530 ; 640) un objet de stimulus visuel (1220) au premier emplacement du regard, apparaissant décalé par rapport à un emplacement initial prévu du regard que l'utilisateur regarde effectivement afin de localiser la cible (1210) lorsque l'au moins une première image du visage est obtenue ;
déterminer (540 ; 650) que l'utilisateur regarde l'objet de stimulus visuel (1220) pendant au moins une deuxième durée sans mouvement oculaire ;
calculer (720) un écart concernant l'emplacement du regard à partir de l'au moins une première image du visage et d'au moins une deuxième image du visage obtenue par le dispositif d'acquisition d'images (1410) en réaction à la détermination du fait que l'utilisateur regarde l'objet de stimulus visuel (1220) pendant au moins la deuxième durée sans mouvement oculaire, l'écart concernant l'emplacement du regard indiquant une différence entre un emplacement que l'utilisateur est effectivement en train de regarder et un emplacement estimé du regard ;
corriger (670 ; 730) le premier emplacement du regard compte tenu de l'écart concernant l'emplacement du regard afin d'obtenir un emplacement final estimé du regard de l'utilisateur correspondant à l'emplacement initial prévu du regard ; et
au moyen de la détermination du fait que l'utilisateur regarde l'objet de stimulus visuel (1220) pendant au moins la deuxième durée sans mouvement oculaire, ce qui sert d'opération de déclenchement réalisée par l'utilisateur dans l'intention de déclencher un événement correspondant à la cible localisée (1210) à l'emplacement initial prévu du regard, déterminer l'événement compte tenu de l'emplacement final estimé du regard de l'utilisateur et déclencher l'événement déterminé.

**FIG. 1**

**FIG. 2**

EP 3 511 803 B1

# FIG. 3

```
                    ┌─────────────┐
                    │    Start    │
                    └──────┬──────┘
                           │                              ╭─ 310
    ┌──────────────────────▼─────────────────────────────────┐
    │           Obtain first face image from user            │
    └──────────────────────┬─────────────────────────────────┘
                           │                              ╭─ 320
    ┌──────────────────────▼─────────────────────────────────┐
    │  Determine first gaze location of user based on first face image  │
    └──────────────────────┬─────────────────────────────────┘
                           │                              ╭─ 330
    ┌──────────────────────▼─────────────────────────────────┐
    │      Display visual stimuli object at first gaze location      │
    └──────────────────────┬─────────────────────────────────┘
                           │                              ╭─ 340
    ┌──────────────────────▼─────────────────────────────────┐
    │          Obtain second face image from user           │
    └──────────────────────┬─────────────────────────────────┘
                           │                              ╭─ 350
    ┌──────────────────────▼─────────────────────────────────┐
    │    Determine event corresponding to trigger intent of user     │
    │ and estimated gaze location of user based on second face image │
    └──────────────────────┬─────────────────────────────────┘
                           │
                    ┌──────▼──────┐
                    │     End     │
                    └─────────────┘
```

## FIG. 4

400

410
First image
acquirer

420
Location
determiner

460
Location
corrector

430
Visual stimuli
object adder

440
Second image
acquirer

450
Trigger intent
determiner

470
Event trigger
module

**FIG. 5**

```
                    ( Start )
                       │
                       ▼                          ⌐ 510
┌──────────────────────────────────────────────────┐
│ Select target to be controlled by user based on   │◄───┐
│                    gaze of user                    │    │
└──────────────────────────────────────────────────┘    │
                       │                                  │
                       ▼              ⌐ 520               │
              ◇                                ◇          │
         ◇   Does gaze of user linger for first    ◇  No  │
              ◇        duration?         ◇────────────────┘
                       │
                      Yes                ⌐ 530
┌──────────────────────────────────────────────────┐
│        Display visual stimuli object in response   │
│            to gaze location being estimated        │
└──────────────────────────────────────────────────┘
                       │                  ⌐ 540
┌──────────────────────────────────────────────────┐
│      Determine final gaze location in response to  │
│        gaze of user lingering for second duration  │
└──────────────────────────────────────────────────┘
                       │
                       ▼
                    ( End )
```

**FIG. 6**

```
                    ┌─────────────┐
                    │    Start    │
                    └─────────────┘
                           │
                           ▼
          ┌──────────────────────────────────────┐  ┌ 610
          │   Estimate location on display at which │
          │     user desires to see with eye of user │
          └──────────────────────────────────────┘
                           │
                           ▼
              ◇ Is movement of eye stopped? ◇  ┌ 620    No
                           │ Yes
                           ▼
          ┌──────────────────────────────────────┐  ┌ 630
          │   Calculate location on display at which user │
          │     gazes based on captured face image │
          └──────────────────────────────────────┘
                           │
                           ▼
          ┌──────────────────────────────────────┐  ┌ 640
          │        Display visual stimuli object │
          │         at first gaze location on display │
          └──────────────────────────────────────┘
                           │
                           ▼
            ◇ Does user gaze at visual stimuli object? ◇  ┌ 650   No
                           │ Yes
                           ▼
          ┌──────────────────────────────────────┐  ┌ 660
          │  Obtain face image of user gazing at visual stimuli object │
          └──────────────────────────────────────┘
                           │
                           ▼
          ┌──────────────────────────────────────┐  ┌ 670
          │   Calculate final gaze location based on face image │
          │      of user gazing at visual stimuli object │
          └──────────────────────────────────────┘
                           │
                           ▼
                    ┌─────────────┐
                    │     End     │
                    └─────────────┘
```

**FIG. 7**

```
        ┌─────────┐
        │  Start  │
        └────┬────┘
             │                              ╱ 710
  ┌──────────▼────────────────────────────────┐
  │  Estimate second gaze location based on    │
  │    face image of user gazing at visual     │
  │              stimuli object                │
  └──────────┬────────────────────────────────┘
             │                              ╱ 720
  ┌──────────▼────────────────────────────────┐
  │   Calculate deviation value between first  │
  │    gaze location and second gaze location  │
  └──────────┬────────────────────────────────┘
             │                              ╱ 730
  ┌──────────▼────────────────────────────────┐
  │ Determine final gaze location by           │
  │        calculating new location            │
  └──────────┬────────────────────────────────┘
             │
        ┌────▼────┐
        │   End   │
        └─────────┘
```

# FIG. 8

```
          ┌─────────┐
          │  Start  │
          └─────────┘
               │
               ▼                                    ╱ 810
┌─────────────────────────────────────────────────────┐
│         Obtain identifying keypoint from first image │
└─────────────────────────────────────────────────────┘
               │
               ▼                                    ╱ 820
┌─────────────────────────────────────────────────────┐
│       Obtain identifying keypoint from second image  │
└─────────────────────────────────────────────────────┘
               │
               ▼                                    ╱ 830
┌─────────────────────────────────────────────────────┐
│   Calculate deviation value between identifying keypoint │
│   of first image and identifying keypoint of second image │
└─────────────────────────────────────────────────────┘
               │
               ▼                                    ╱ 840
┌─────────────────────────────────────────────────────┐
│            Normalize calculated deviation value      │
└─────────────────────────────────────────────────────┘
               │
               ▼                                    ╱ 850
┌─────────────────────────────────────────────────────┐
│   Detect pupil center location of each of eyes from first image │
└─────────────────────────────────────────────────────┘
               │
               ▼                                    ╱ 860
┌─────────────────────────────────────────────────────┐
│  Detect pupil center location of each of eyes from second image │
└─────────────────────────────────────────────────────┘
               │
               ▼                                    ╱ 870
┌─────────────────────────────────────────────────────┐
│   Obtain normalized deviation value of pupil center  │
│        based on first image and second image         │
└─────────────────────────────────────────────────────┘
               │
               ▼                                    ╱ 880
┌─────────────────────────────────────────────────────┐
│      Estimate deviation in gaze location based on    │
│        gaze deviation estimation model               │
└─────────────────────────────────────────────────────┘
               │
               ▼
          ┌─────────┐
          │   End   │
          └─────────┘
```

32

## FIG. 9

**FIG. 10**

1011    1010

1090

**FIG. 11**

**FIG. 12**

EP 3 511 803 B1

## FIG. 13

1300

1310

# FIG. 14

1400

1410

Image acquirer

1420

Processor

1430

Memory

**FIG. 15**

<u>1500</u>

EP 3 511 803 B1

**EP 3 511 803 B1**

**Patent documents cited in the description**

- US 4836670 A1
- US 20150331485 A1
- CN 106020591 A
- US 20100205667 A1
- US 9832452 B1
- US 2014372957 A1